# EUROPÄISCHE PATENTSCHRIFT

(11) **EP 3 602 386 B1**
(45) Veröffentlichungstag und Bekanntmachung des Hinweises auf die Patenterteilung: **02.11.2022**
(21) Anmeldenummer: 18707695.5
(22) Anmeldetag: 23.02.2018
(51) Int. Cl.: G06F 21/64

(54) **INTEGRITÄTSSICHERUNG FÜR DIGITAL CODIERTE KOPIEN**
INTEGRITY ASSURANCE FOR DIGITAL COPIES
PROTECTION D'INTÉGRITÉ POUR COPIES CODÉES SOUS FORMAT NUMÉRIQUE

(30) Priorität: 27.03.2017 DE 102017205164
(43) Veröffentlichungstag der Anmeldung: 05.02.2020
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE)
(74) Vertreter: Richardt Patentanwälte PartG mbB
(86) Internationale Anmeldenummer: PCT/EP2018/054558
(87) Internationale Veröffentlichungsnummer: WO 2018/177663

(56) Entgegenhaltungen:
- Mohammed Rangwala ET AL: "A Mutual Agreement Signature Scheme for Secure Data Provenance", , 31. Dezember 2014 (2014-12-31), XP055476791, ISBN: 978-1-4799-3572-7 Gefunden im Internet: URL:https://www.science.iupui.edu/~xkzou/P apers/ICCCN14_Digital_Provenance.pdf [gefunden am 2018-05-18]
- AHMED IDREES ET AL: "Aggregated Signatures for Chaining: A Secure Provenance Scheme", 2016 IEEE TRUSTCOM/BIGDATASE/ISPA, IEEE, 23. August 2016 (2016-08-23), Seiten 2012-2017, XP033063568, DOI: 10.1109/TRUSTCOM.2016.0307 [gefunden am 2017-02-07]
- Christoph Bergmann: "Notare und Banken, Ausweise und Börsen - BitcoinBlog.de - das Blog für Bitcoin und andere virtuelle Währungen", , 8. Dezember 2015 (2015-12-08), XP055476671, Gefunden im Internet: URL:https://bitcoinblog.de/2015/12/08/nota re-und-banken-ausweise-und-boersen/ [gefunden am 2018-05-18]

## Beschreibung

Die Erfindung betrifft ein Verfahren und ein Computersystem zur elektronischen Datenverarbeitung. Insbesondere betrifft die Erfindung ein Verfahren und ein Computersystem zur Integritätssicherung beim Kopieren digital codierter Dokumente.

Die Möglichkeit einer Veränderung oder gar gezielten Manipulation von digital codierten Daten kann bei einer typischen elektronischen Datenübertragung und/oder -verarbeitung im Allgemeinen kaum verhindert werden. Dies gilt insbesondere, wenn es sich um öffentlich zugängliche Daten handelt, wie etwa um Daten, die im Internet bereitgestellt werden. Digital codierte Dokumente, beispielsweise in Form von Textdateien, lassen sich mit Hilfe eines Computers leicht kopieren und verändern. Somit stellt sich häufig die Frage, ob Informationen eines vorliegenden digital codierten Dokuments authentisch sind oder aber verändert, wenn nicht gar absichtlich manipuliert wurden. Diese Frage stellt sich insbesondere im Bereich der modernen Nachrichtenverbreitung über das Internet. Bei der Verbreitung einer Nachrichtenmeldung in Form eines digital codierten Dokuments, wie etwa eines Textes, eines Bildes, einer Ton- und/oder Filmdatei, über das Internet wird das entsprechende Dokument regelmäßig kopiert und zum weiteren Abruf auf zusätzlichen Webseiten bzw. Plattformen bereitgestellt oder an mögliche Interessenten verschickt. Bei der großen Anzahl von Nachrichtenmeldungen, welche über unterschiedlichste Plattformen, etwa Websites, verbreitet oder mittels Online-Diensten verschickt werden, stellt sich die Frage nach der Vertrauenswürdigkeit der Meldungen: Sind die jeweiligen Meldungen korrekt oder handelt es sich möglicherweise um Falschmeldungen.

Eine Falschmeldung ist eine unzutreffende Nachrichtenmeldung, welche beispielsweise unbeabsichtigt durch fehlerhafte oder nachlässige Recherche oder durch bewusstes Lancieren entstehen kann. Als "Fake News" werden Falschmeldungen bezeichnet, die sich überwiegend im Internet, insbesondere in sozialen Netzwerken verbreiten und die mitunter auch von Journalisten aufgegriffen werden. Als besonders problematisch können sich Fake News erweisen, welche den Eindruck erwecken aus einer allgemein anerkannten und seriösen Nachrichtenquelle zu stammen. Dies kann etwa der Fall sein, wenn eine originale Nachrichtenmeldung kopiert und in manipulierter Form weiterverbreitet wird.

Eine Überprüfung von Nachrichtenmeldung auf ihre Integrität hin erweist sich gerade im Bereich des Internets als mühsam, wenn nicht gar bisweilen als unmöglich, da hierfür der Ursprung der entsprechenden Nachrichten rekonstruiert werden muss. Sind die Verbreitungswege einer Nachrichtenmeldung aber nicht bekannt, lässt sich schwer nachvollziehen, wie die vorliegende Nachricht zustande gekommen ist bzw. ob und wer diese möglicherweise manipuliert hat.

Der Artikel "A Mutual Agreement Signature Scheme for Secure Data Provenance" von Mohammed Rangwala et al., 31. Dezember 2014, beschreibt eine digitale Provenienz, welche eine fälschungssichere Aufzeichnung einer Kette von aufeinanderfolgender Verwahrung eines digitalen Objekts und eine Abfolge von Operationen, die an dem digitalen Objekt ausgeführt werden. Die digitale Provenienz bildet eine unveränderliche Struktur eines gerichteten azyklischen Graphen (DAG). Es wird ein Schema beschrieben, das unterschriftsbasierte gegenseitige Vereinbarungen zwischen aufeinanderfolgenden Benutzern verwendet, um den Übergang der Verantwortung des Dokuments während der Weitergabe entlang einer Kette von Benutzern klar abzugrenzen. Neben der Wahrung von Vertraulichkeit, Unveränderlichkeit und Verfügbarkeit einer digitalen Herkunftskette wird die Darstellung von DAG-Herkunftsstrukturen unterstützt.

Der Artikel "Aggregated Signatures for Chaining: A Secure Provenance Scheme" von Idrees Ahmed et al., 23. August 2016, 2016 IEEE TrustCom-BigDataSE-ISPA, S. 2012-2017, beschreibt ein auf aggregierten Signaturen basierendes Provenienzschema, welches Vertraulichkeit, Integrität, Nicht-Zurückweisung und Verfügbarkeit in einer verteilten Umgebung gewährleistet, um eine sichere Provenienz zu erreichen. Diese Provenienz generiert einen gerichteten azyklischen Graphen (DAG) und eine Kettenstruktur.

Der Artikel "Notare und Banken, Ausweise und Börsen - BitcoinBlog.de - das Blog für Bitcoin und andere virtuelle Währungen" von Christoph Bergmann, 8. Dezember 2015, beschreibt Beispiele für ein Zertifizieren von Dokumenten in einer Blockchain, ein Verwalten von Identitäten durch eine Blockchain, eine globale Blockchain für Banken und ein Herausgeben von Krypta-Anleihen.

Der Erfindung liegt somit die Aufgabe zugrunde, ein Verfahren zur Integritätssicherung digital codierter Kopien eines digital codierten Ursprungsdokuments zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben. Ausführungsformen umfassen ein Verfahren und ein Computersystem zur Integritätssicherung digital codierter Kopien eines digital codierten Ursprungsdokuments unter Verwendung einer in die Kopien integrierte Blockchain-Struktur zur Protokollierung der Abstammungshistorien der Kopien.

Ausführungsformen umfassen ein Verfahren zur Integritätssicherung digital codierter Kopien eines digital codierten Ursprungsdokuments unter Verwendung einer in die Kopien integrierten Blockchain-Struktur zur Protokollierung der Abstammungshistorie der Kopien Das Verfahren umfasst:
- Bereitstellen einer ersten digital codierten Kopiervorlage, welche Daten des digital codierten Ursprungsdokuments und eine Blockchain-Struktur umfasst, in der die Abstammungshistorie der ersten Kopiervorlage protokolliert ist,
- Erstellen einer ersten digital codierten Kopie von Daten der ersten Kopiervorlage, wobei die kopierten Daten der ersten Kopie die Daten des digital codierten Ursprungsdokuments und die Blockchain-Struktur der ersten Kopiervorlage umfassen,
- Hinzufügen eines zusätzlichen Blocks zu der kopierten Blockchain-Struktur, wobei der zusätzliche Block der Kopiervorlage zugeordnet ist, wobei der zusätzliche Block einen Identifikator der Kopiervorlage und ein Prüfmerkmal der kopierten Daten umfasst, welcher eine Integritätsprüfung der kopierten Daten inklusive der kopierten Blockchain-Struktur ermöglicht.

Unter einem digital codierten Dokument wird ein Datenkonstrukt zur elektronischen Datenverarbeitung verstanden, welches digital codierte Daten umfasst. Hierbei kann es sich insbesondere um eine elektronische Datei eines beliebigen Dateiformats handeln, wie etwa eine Text-, Tabellen-, Ton- Bild- und/oder Videodatei. Nach Ausführungsformen kann die elektronische Datei ausführbar oder nicht ausführbar sein. Bei dem Dokument kann es sich insbesondere um eine Nachrichtenmeldung handeln, etwa in Form einer Webseite, einer mit einer Webseite verlinkten oder in eine Webseite integrierten Datei oder eines Postings. Unter einer Webseite bzw. Webdokument, Internetseite oder Webpage wird ein über das Internet bereitgestelltes Dokument verstanden, das beispielsweis von einem Webserver angeboten und mit einem Browser eines Nutzer-Computersystems unter Angabe eines einheitlichen Ressourcenzeigers, d.h. eines "Uniform Resource Locators"(URL), abgerufen werden kann. Beispielsweise handelt es sich um ein HTML-Dokument. Unter einem Posting wird hier ein einzelner Beitrag auf einer Internet-Plattform, wie etwa einer Social-Media-Plattform, in einem Webforum oder einem Blog verstanden.

Unter einer digital codierten Kopie wird eine Kopie eines digital codierten Dokuments oder zumindest eines Teils eines digital codierten Dokuments verstanden.

Die Abstammungshistorie einer digital codierten Kopie umfasst ausgehend von einem der Kopie zugrundeliegenden digital codierten Ursprungsdokument alle Kopiervorgänge bzw. Zwischenkopien, welche bei diesen Kopiervorgängen erstellt wurden, bis hin zu der Erstellung der digital codierten Kopie, der die Abstammungshistorie zugeordnet ist. Anhand der Abstammungshistorie kann somit einerseits der Ausbreitungsweg der von einer vorliegenden digital codierten Kopie umfassten Daten von einem zugrundeliegenden Ursprungsdokument bis hin zu der vorliegenden Kopie nachvollzogen werden, andererseits kann durch Vergleich mit den in der Abstammungshistorie angeführten Zwischenkopien nachgeprüft werden, ob und ggf. bei welchem Kopiervorgang Daten verändert wurden.

Unter einer Blockchain-Struktur wird eine Datenstruktur verstanden, welche einen Blockchain bildet. Unter einer "Blockchain" wird eine geordnete Datenstruktur verstanden, welche eine Mehrzahl von miteinander verketteten Datenblöcken umfasst. Insbesondere wird unter einer Blockchain eine Datenbank verstanden, deren Integrität, d.h. Sicherung gegen nachträgliche Manipulation, durch Speicherung eines Prüfmerkmals, wie etwa eines Hashwertes, des vorangehenden Datensatzes in dem jeweils nachfolgenden Datensatz gesichert ist. Das Prüfmerkmal ist dabei dem Inhalt des vorangehenden Datensatzes zugeordnet und charakterisiert diesen eindeutig. Wird der Inhalt des vorangehenden Datensatzes verändert, so erfüllt dieser nicht mehr das Prüfmerkmal, woraus die Veränderung ersichtlich wird. Im Falle von bekannten Blockchain-Strukturen wird etwa jeder Block der Blockchain eindeutig durch einen Hash-Wert identifiziert und referenziert einen Vorgängerblock in der Blockchain, dessen Hash-Wert er umfasst.

Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde beispielsweise im Jahre 2008 in einem White Paper unter dem Pseudonym Satoshi Nakamoto im Kontext der Kryptowährung Bitcoin beschrieben ("Bitcoin: Peer-to-Peer Electronic Cash System" (https://bitcoin.org/bitcoin.pdf)). In diesem Ausführungsbeispiel enthält jeder Block der Blockchain in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke nicht möglich ist, ohne auch alle nachfolgenden Blöcke ebenfalls zu modifizieren.

Integrität bezeichnet hier allgemein die Sicherstellung der Korrektheit, d.h. Unversehrtheit bzw. Authentizität, von Daten. Der Begriff Integrität drückt dabei aus, dass die Daten vollständig und unverändert sind. In der Informationstechnik wird der Begriff der Integrität ferner auf "Informationen" angewendet, wobei der Begriff "Information" für Daten steht, denen je nach Zusammenhang bestimmte Attribute wie z. B. Autor oder Zeitpunkt der Erstellung zugeordnet werden können. Der Verlust der Integrität im Fall von Informationen kann daher bedeuten, dass diese unerlaubt verändert, Angaben zum Autor verfälscht oder Zeitangaben zur Erstellung manipuliert wurden.

Ein Identifikator bezeichnet ein charakteristisches Merkmal eines Objekts, wie etwa einer digital codierten Kopiervorlage, zur eindeutigen Identifizierung des entsprechenden Objekts. Bei einem Identifikator kann es sich beispielsweise um einen Dateinamen, eine Seriennummer, einen Datenbank-Identifikator, eine Stammnummer, eine Speicheradresse, eine URI und/oder eine URL handeln. Nach Ausführungsformen umfasst ein Identifikator beispielsweise einen alphanumerischen Code und/oder geometrischen Code.

Ein Prüfmerkmal für Daten ist ein den entsprechenden Daten zugeordnetes Merkmal, welches die Daten derart eindeutig charakterisiert, dass die Integrität der Daten anhand des Prüfmerkmals überprüft werden kann. Das Prüfmerkmal wird beispielsweise aus den entsprechenden Daten erzeugt, abgeleitet bzw. berechnet, wie etwa eine Prüfsumme, und ist in der Lage mindestens einen Bitfehler in den Daten zu erkennen. Bei einem Prüfmerkmal kann es sich um einen Prüfwert handeln, etwa in Form einer Prüfsumme, beispielsweise Prüfziffer, Quersumme oder Paritätsbit, oder in Form eines mittels eine Hashfunktion aus den Daten berechneten Hash-Werts. Ferner kann es sich bei einem Prüfmerkmal auch um ein komplexeres Datenkonstrukt handeln, wie etwa eine Matrix. Schließlich kann es sich bei einem Prüfmerkmal auch um eine Prüffunktion handeln, mit einem oder mehreren Parametern, welche aus den entsprechenden Daten erzeugt, abgeleitet bzw. berechnet wurden.

Ausführungsformen können den Vorteil haben, dass anhand der in die digital codierten Kopien integrierten Blockchain-Struktur jederzeit die Abstammungshistorie der entsprechenden Kopien nachvollzogen werden kann. Beispielsweise entsprechen die einzelnen Blöcke einer Blockchain-Struktur jeweils einem Kopiervorgang. Somit lässt sich beispielsweise anhand einer Blockchain-Struktur mit N Blöcken nachvollziehen, dass die vorliegende Kopie das Resultat von N Kopiervorgängen ausgehend von einem Ursprungsdokument darstellt. Nach Ausführungsformen kann die Anzahl an Blöcken auch größer als N sein, z.B. N+1, falls etwa ein Genesisblock vorgesehen ist. Ein solcher Genesisblock kann beispielsweise dem Ursprungsdokument zugeordnet sein und dessen Identifikator umfassen.

Beispielsweise ist jeder Kopie der Abstammungshistorie ein Identifikator zugeordnet, anhand dessen die individuellen Kopien eindeutig identifizierbar sind. Aus der Abstammungshistorie kann somit nachvollzogen werden, welche digital codierten Dokumente zwischenzeitlich als Kopiervorlagen, d.h. Zwischenkopien, bei der Erstellung der vorliegenden Kopie verwendet wurden. Ferner kann anhand des Prüfmerkmals für jeden der Kopiervorgänge jeweils nachgeprüft werden, welche Daten des Ursprungsdokuments dem jeweiligen Kopiervorgang zugrunde lagen.

Anhand der Daten der Blockchain werden somit detaillierte Informationen dazu bereitgestellt, wie ein vorliegendes digital codiertes Dokument zustande gekommen ist. Beispielsweise durch Rückgriff auf die zur Erstellung verwendeten Kopiervorlagen sowie das Ursprungsdokuments kann überprüft werden, ob die bereitgestellten Daten korrekt sind oder ob die Daten im Zuge eines der Kopiervorgänge, sei es versehentlich oder absichtlich, verändert wurden.

Handelt es sich bei der digital codierten Kopie beispielsweise um eine Nachrichtenmeldung oder einen Auszug einer solchen Nachrichtenmeldung, welche etwa im Internet auf einer Webseite bereitgestellt wird, so kann man anhand der integrierten Blockchain-Struktur effektiv und effizient prüfen, woher die entsprechende Nachrichtmeldung erstens stammt und ob diese zweitens verändert wurde. Ist die Integrität der Nachrichtenmeldung gewahrt, so kann anhand ihres Ursprungs zudem beurteilt werden, ob die Meldung vertrauenswürdig ist, d.h. ob darauf vertraut werden kann, dass Sachverhalte der realen Welt korrekt abgebildet werden.

Ausführungsformen können somit den Vorteil haben das Manipulationen, welche einem Man-in-the-Middle-Angriff (MITM-Angriff) entsprechen, unterbunden bzw. erfolgreich abgewehrt werden können. Bei der Verbreitung eines Dokuments, wie etwa einer Nachrichtenmeldung, über das Internet hat im Allgemeinen weder der Ersteller des Ursprungsdokuments noch der Leser, welcher eine Kopie des Ursprungsdokuments liest, Einfluss auf den in der entsprechenden Kopie resultierenden Ausbreitungsweg der Daten, der möglicherweise eine Mehrzahl von Kopiervorgängen bzw. Vervielfältigungsprozessen umfasst. Ausführungsformen erlauben es diesen Ausbreitungsweg vollständig zu rekonstruieren und mögliche Man-in-the-Middle-Angriffe zu identifizieren. Ferner können unter Verwendung der Blockchain das Ursprungsdokument identifiziert und/oder die ursprünglichen Daten rekonstruiert werden.

Durch Abgleich mit der Abstammungshistorie gemäß der Blockchain-Struktur mit den in der Blockchain-Struktur identifizierten Kopiervorlagen sowie dem Ursprungsdokument kann beispielsweise zunächst geprüft werden, ob die Integrität der Blockchain-Struktur bzw. der darin protokollierten Abstammungshistorie gewahrt ist. Können alle in der Abstammungshistorie angeführten Dokumente tatsächlich identifiziert werden und kann die Korrektheit aller in der Abstammungshistorie angeführten Prüfelemente durch Vergleich mit den identifizierten Dokumenten nachgewiesen werden, so ist die Integrität der Blockchain-Struktur. Mit anderen Worten gibt die Blockchain-Struktur also die tatsächliche Abstammungshistorie wider. Durch Vergleich der Daten der vorliegenden Kopie mit den Daten des in der Blockchain-Struktur identifizierten Ursprungsdokuments kann beispielsweise nachgeprüft werden, ob die Daten im Zuge der Vervielfältigung verändert wurden, d.h. ob die Integrität der entsprechenden Daten gewahrt wurde.

In diesem Kontext bedeutet die Feststellung, dass die Integrität der kopierten Daten verletzt wurde, nicht unbedingt, dass beispielsweise inhaltliche Aussagen eines Textes verändert wurden. Vielmehr kann es sich bei einer die Integrität verletzenden Veränderung beispielsweise auch um eine hinzugefügte Erläuterung, ein Weglassungen und/oder eine schriftbildliche Änderung handeln. Anhand der Prüfmerkmale der einzelnen Blöcke der Blockchain kann nachvollzogen werden, welche Kopiervorlagen mit welchem Dateninhalt den einzelnen Kopiervorgängen jeweils zugrunde gelegen haben. Dabei protokolliert die Blockchain-Struktur zugleich auch alle Änderungen, falls solche an den Daten des Ursprungsdokuments im Zuge der Kopiervorgänge vorgenommen wurden. Die Blockchain-Struktur kann somit herangenommen werden, um durch Abgleich mit den einzelnen in der Blockchain-Struktur angeführten Kopiervorlagen der Abstammungshistorie und insbesondere mit dem Ursprungsdokument nachzuprüfen, ob Daten im Zuge der Kopiervorgänge verändert wurden und worin diese Veränderungen gegebenenfalls bestehen.

Stellt man beispielsweise ein für eine Kopiervorlage berechnetes Prüfmerkmal einem für die resultierende Kopie berechneten Prüfmerkmal ohne Berücksichtigung des aus dem Kopiervorgang resultierenden zusätzlichen Blocks der Blockchain-Struktur gegenüber, so zeigt sich im Falle einer Übereinstimmung beider Prüfmerkmale, dass keine Veränderung der Daten vorgenommen wurde. Aus einer Abweichung ergibt andererseits, dass die Daten im Zuge des Kopiervorgangs verändert wurden.

Wird beispielsweise eine digital codierte Kopie in Form einer durch eine Webseite bereitgestellten Nachrichtmeldung aufgerufen, so kann das Computersystem des Nutzers im Hintergrund unter Verwendung der in das aufgerufene Dokument, bzw. in die Webseite, integrierten Blockchain-Struktur eine Integritätsprüfung des Dokuments ausführen. Das Ergebnis dieser Integritätsprüfung kann beispielsweise in der Mitteilung bestehen, dass keine Veränderungen an den kopierten Daten vorgenommen wurden und diese mit den Daten des ursprünglichen Dokuments identisch sind. Ferner kann die Abstammungshistorie des aufgerufenen Dokuments angezeigt werden. Wenn die Identifikatoren der einzelnen Kopien beispielsweise auch identifizieren, wer diese Kopien erstellt hat, kann die Abstammungshistorie zudem aufzeigen, von wem eine Nachrichtmeldung stammt bzw. wer aktiv zu deren Verbreitung beigetragen hat. Ferner kann das Ergebnis der Integritätsprüfung anzeigen, dass die vorliegenden Daten nicht identisch mit den Daten des ursprünglichen Dokuments sind. Darüber hinaus kann die Mitteilung nach Ausführungsformen aber auch exakt bestimmen, an welchen Punkten der Abstammungshistorie, d.h. bei welchem Kopiervorgang und ggf. von wem, welche Änderungen an den Daten vorgenommen wurden. Hierzu umfassen die Identifikatoren der Kopiervorlagen wie zuvor erläutert vorteilhafterweise jeweils einen Identifikator des Erstellers der Kopiervorlage. Dieser Identifikator kann beispielsweise eine Internetdomain, eine Website, ein Profil einer Social-Media-Plattform oder eines Forums, ein Pseudonym, eine IP-Adresse, eine juristische Person und/oder eine natürliche Person als Ersteller identifizieren.

Nach Ausführungsformen umfasst das Bereitstellen der ersten Kopiervorlage:
- Bereitstellen einer zweiten digital codierten Kopiervorlage, welche die Daten des digital codierten Ursprungsdokuments umfasst,
- Erstellen der ersten Kopiervorlage als einer zweiten digital codierten Kopie von Daten der zweiten digital codierten Kopiervorlage, wobei die kopierten Daten der zweiten Kopie die Daten des digital codierten Ursprungsdokuments umfassen,
- Hinzufügen eines Blocks der Blockchain-Struktur zu der zweiten Kopie, wobei der Block der zweiten Kopiervorlage zugeordnet ist, wobei der Block einen Identifikator der zweiten Kopiervorlage und ein Prüfmerkmal der kopierten Daten umfasst, welcher eine Integritätsprüfung der kopierten Daten der zweiten Kopie ermöglicht.

Die Verwendung von Ordinalzahlen wie "erstes", "zweites", "drittes" etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren. Insbesondere kann es sich bei der zuvor genannten "zweiten" Kopie beispielsweise um eine Kopie handeln, welche als ("erste") Kopiervorlage zum Erstellen der "ersten" Kopie verwendet und somit in zeitlicher Hinsicht vor der "ersten" Kopie erstellt wird.

Ausführungsformen können den Vorteil haben, dass durch eine sukzessive Erweiterung der Blockchain-Struktur mit jedem Kopiervorgang und ein Einfügen der resultierenden erweiterten Blockchain-Struktur in die durch den entsprechenden Kopiervorgang erstellte Kopie jede Kopie Informationen zu ihrer vollständigen Abstammungshistorie bereitstellt.

Nach Ausführungsformen handelt es sich bei der zweiten digital codierten Kopiervorlage um das digital codierte Ursprungsdokument.

Ausführungsformen können den Vorteil haben, dass die Blockchain-Struktur ausgehend von der ersten Kopie des digital codierten Ursprungsdokuments mit jedem weiteren Kopierschritt sukzessive wächst. Nach Ausführungsformen umfasst das digital codierte Ursprungsdokument keine Blöcke der Blockchain-Struktur. Die unter Verwendung des Ursprungsdokuments als Kopiervorlage erstellte Kopie umfasst einen ersten Block der Blockchain-Struktur. Eine weitere auf Basis dieser Kopie als Kopiervorlage erstellte Kopie umfasst sodann zwei Blöcke der Blockchain, d. h. den in der Reihenfolge ersten und zweiten Block der Blockchain-Struktur. Dies setzt sich mit jeder weiteren Kopie fort. Nach weiteren Ausführungsformen umfasst bereits das digital codierte Ursprungsdokument einen ersten Block der Blockchain-Struktur, d.h. einen Genesisblock. Dieser Genesisblock kann beispielsweise einen ein Prüfmerkmal und/oder einen Identifikator des Ursprungsdokuments umfassen.

Nach Ausführungsformen handelt es sich bei der zweiten digital codierten Kopiervorlage um eine dritte Kopie mit den kopierten Daten des digital codierten Ursprungsdokuments. Die zweite Kopiervorlage umfasst eine Blockchain-Struktur, wobei die Blockchain-Struktur einen Block für jeden Kopiervorgang der Abstammungshistorie der zweiten Kopiervorlage ausgehend von dem digital codierten Ursprungsdokument bis hin zu der Erstellung der zweiten Kopiervorlage umfasst. Die Blöcke sind jeweils der Kopiervorlage zugeordnet, welche für den entsprechenden Kopiervorgang verwendet wurde. Jeder der Blöcke umfasst jeweils einen Identifikator der Kopiervorlage, welcher der entsprechende Block zugeordnet ist. Jeder der Blöcke umfasst jeweils ein Prüfmerkmal der kopierten Daten des entsprechenden Kopiervorgangs, welcher eine Integritätsprüfung der kopierten Daten inklusive der kopierten Blockchain-Struktur des entsprechenden Kopiervorgangs ermöglicht.

Die kopierten Daten der zweiten Kopie umfassen die Blockchain-Struktur der zweiten Kopiervorlage und das Hinzufügen des Blocks zu der zweiten Kopie umfasst ein Erweitern der kopierten Blockchain-Struktur um den entsprechenden Block. Das Prüfmerkmal der kopierten Daten ermöglicht eine Integritätsprüfung der kopierten Daten der zweiten Kopie inklusive der kopierten Blockchain-Struktur.

Ausführungsformen können den Vorteil haben, dass jede Kopie ausgehend von dem digital codierten Ursprungsdokument einen Block für jeden Kopiervorgang der Abstammungshistorie der entsprechenden Kopie umfasst. Bei diesen Kopiervorgängen handelt es sich um solche Kopiervorgänge, welche die entsprechende Kopie jeweils in einer direkten Folge mit dem Ursprungsdokument verbinden. Dient eine der Kopien als Kopiervorlage für eine Mehrzahl weiterer Kopien, so bildet diese Kopiervorlage einen Verzweigungspunkt. Die Blockchain-Strukturen der nachfolgenden Kopien unterscheiden sich dann je nachdem, zu welchem Zweig der Verzweigung die entsprechenden Kopien gehören. In diesem Fall weist jede Blockchain-Struktur der nachfolgenden Kopien für sich genommen beispielsweise nur einen Blockchain-Strang bzw. Zweig auf, d.h. keine Verzweigung. Betrachtet man jedoch die Blockchain-Strukturen von Kopien unterschiedlicher Zweige zusammen, so bilden diese eine Baumstruktur, d. h. die einzelnen Blockstränge weisen ausgehend von dem Ursprungsdokument unterschiedlich lange Anfangsabschnitte auf, welche zumindest für einige der Blockstränge identisch sind. Insbesondere weisen alle Blockstränge das Ursprungsdokument als gemeinsamen, identischen Ursprung auf.

Nach Ausführungsformen umfassen die kopierten Daten der ersten digital codierten Kopie und/oder die kopierten Daten der zweiten digital codierten Kopie zumindest einen Auszug der Daten des digital codierten Ursprungsdokuments.

Nach Ausführungsformen umfassen die kopierten Daten der ersten digital codierten Kopie und/oder die kopierten Daten der zweiten digital codierten Kopie die vollständigen Daten des digital codierten Ursprungsdokuments.

Ausführungsformen können den Vorteil haben, dass die digital codierten Kopien das Ursprungsdokument vollständig als Kopie umfassen. Alternative Ausführungsformen können den Vorteil haben, dass sie Teile des Ursprungsdokuments umfassen, beispielsweise einen oder mehrere Auszüge aus diesem. Bei einer Integritätsprüfung einer der Kopien anhand der Blockchain-Strukturen, würde nach Ausführungsformen auffallen, dass das Ursprungsdokument nicht vollständig übernommen wurde. Nach weiteren Ausführungsformen sind die Prüfmerkmale der Blockchain-Struktur dem kopierten Auszug des Ursprungsdokuments zugeordnet. Mithin ergeben sich im Fall einer Kopie von mehreren unabhängigen Auszügen aus dem Ursprungsdokument jeweils eigenständige Blockchain-Strukturen für jeden dieser Auszüge. Mit anderen Worten kann eine Kopie eine Mehrzahl von Blockchain-Strukturen umfassen, wobei jede dieser Blockchain-Strukturen einem Auszug zugeordnet ist. Nach Ausführungsformen kann ein digital codiertes Dokument kopierte Datensätze von einer Mehrzahl von Ursprungsdokumenten umfassen. Hierbei stellt jeder Datensatz für sich eine Kopie von Daten eines einzigen Ursprungsdokuments dar. Somit ist jedem einzelnen Datensatz eine eigenständige Blockchain-Struktur zugeordnet, wobei die von den Blockchain-Strukturen protokollierten Abstammungshistorien von unterschiedlichen Ursprungsdokumenten ausgehen können.

Nach Ausführungsformen sind die kopierten Daten in einer Auszeichnungssprache editiert, wobei die kopierten Daten jeweils zumindest eine Auszeichnungsmarkierung für zumindest ein Datenelement der kopierten Daten des Ursprungsdokuments umfassen, wobei die Auszeichnungsmarkierung des Datenelements die Blockchain-Struktur der Kopie als ein Attribut umfasst.

Unter einer Auszeichnungssprache (englisch markup language, abgekürzt ML) wird hier eine maschinenlesbare Sprache zum Gliedern und/oder Formatieren von Texten oder anderen Daten verstanden. Eine Auszeichnungssprache ist somit eine formale, nicht-natürliche Sprache, die es ermöglicht, unterschiedliche Elemente eines Textes als solche zu kennzeichnen. Durch eine Auszeichnungssprache können beliebigen Elemente auf deklarative Weise Eigenschaften zugewiesen werden, wodurch deren Bedeutung ausgedrückt werden kann. Mit einer Auszeichnungssprach können unter Verwendung von Auszeichnungsmarkierungen also Eigenschaften, Zugehörigkeiten und Darstellungsformen von Datenelement beschrieben werden. Bei solchen Datenelementen kann es sich um Elemente einer Datenstruktur, insbesondere einer Textstruktur, wie etwa Zeichen, Wörter, Sätze, Überschriften, Absätze, Kapitel, etc. handeln.

Bei Auszeichnungsmarkierungen handelt es sich beispielsweise um Metadaten des digital kodierten Dokuments, welche etwa in den Quelltext des Dokuments integriert sind, bei einer bestimmungsgemäßen Ansicht des Dokuments aber nicht mit angezeigt werden. Die Auszeichnungsmarkierungen markieren beispielsweise den Beginn und das Ende eines Datenelements, etwa in Form eines Starttags und eines Endtags. Ferner kann auch eine einzelne Auszeichnungsmarkierung, beispielsweise in Form eines Leertags, einem Datenelement, etwa einem Bild, zugeordnet sein.

Ausführungsformen können den Vorteil haben, dass durch eine Auszeichnungssprache Datenelemente des Ursprungsdokuments ausgezeichnet werden jeweils mit einer eigenständigen Blockchain-Struktur versehen werden können. Somit kann für jedes Datenelement eine eigenständige Abstammungshistorie protokolliert werden.

Nach Ausführungsformen umfassen die kopierten Daten jeweils eine Mehrzahl von Auszeichnungsmarkierungen, wobei jede der Auszeichnungsmarkierungen jeweils einem Datenelement der kopierten Daten des Ursprungsdokuments zugeordnet ist, wobei für jedes der entsprechenden Datenelemente eine eigenständige Blockchain-Struktur bereitgestellt wird, welche die Auszeichnungsmarkierung des jeweiligen Datenelements als ein Attribut umfasst.

Nach Ausführungsformen handelt es sich bei der Auszeichnungssprache um eine HTML- und/oder XML-Sprache, wobei die Auszeichnungsmarkierungen jeweils zumindest ein Tag umfassen, welches die Blockchain-Struktur als ein Attribut umfasst.

Nach Ausführungsformen umfasst zumindest eine Auszeichnungsmarkierung ein Tag-Paar und zumindest ein Tag des entsprechenden Tag-Paares umfasst die Blockchain-Struktur als ein Attribut.

Nach Ausführungsformen umfasst das Verfahren ferner: auf das Hinzufügen des Blocks zu der zweiten Kopie hin, Aktualisieren der Blockchain-Strukturen aller Kopien, welche die Abstammungshistorie der zweiten Kopie umfassen, wobei das Aktualisieren jeweils ein Ergänzen der entsprechenden Blockchain-Struktur um den hinzugefügten Block umfasst. Nach Ausführungsformen umfasst das Verfahren ferner: auf das Hinzufügen des zusätzlichen Blocks zu der kopierten Blockchain-Struktur der ersten Kopiervorlage hin, Aktualisieren der Blockchain-Strukturen aller Kopien, welche die Abstammungshistorie der ersten Kopie umfassen, wobei das Aktualisieren jeweils ein Ergänzen der entsprechenden Blockchain-Struktur um den zusätzlichen Block umfasst.

Ausführungsformen können den Vorteil haben, dass die Blockchain-Strukturen aller Kopiervorlagen der Abstammungshistorie bei jedem nachfolgenden Kopiervorgang ebenfalls erweitert werden. Im Ergebnis umfasst somit jede der Kopiervorlage eine vollständige Blockchain-Struktur, die nicht nur alle der entsprechenden Kopiervorlagen vorangehenden bzw. zugrundeliegenden Kopiervorlagen, sondern zudem auch alle aus ihr hervorgegangenen Kopien identifiziert. Liegt eine einzelne Kopie der Abstammungshistorie vor, so kann aus deren Blockchain-Struktur abgeleitet werden, welche weiteren Kopien aus dieser Kopie bis jetzt hervorgegangen sind. Wenn diese Kopie oder zumindest eine aus dieser Kopien hervorgegangen Kopie als direkte Kopiervorlage für eine Mehrzahl unabhängiger Kopien gedient hat, so weist die aktualisierte Blockchain-Struktur der vorliegenden Kopie Verzweigungen auf. Solche Verzweigungen ergeben sich jedes Mal, wenn die vorliegende Kopie oder eine nachfolgende Kopie als direkte Kopiervorlage für mehr als eine Kopie dient. Mit anderen Worten umfasst eine solche Blockchain-Struktur nicht nur einen einzelnen Blockchain-Strang bzw. Zweig, sondern eine baumförmige Struktur mit Verzweigungen, d.h. einer Mehrzahl von Zweigen. Somit kann der vollständige Ausbreitungsweg der kopierten Daten auf der Basis einer vorliegenden digital codierten Kopie der Daten nachvollzogen werden.

Nach Ausführungsformen umfasst das Ursprungsdokument eine Blockchain-Struktur. Nach Ausführungsformen umfasst das Verfahren ferner: auf das Hinzufügen des Blocks zu der zweiten Kopie hin, Aktualisieren der Blockchain-Struktur des Ursprungsdokuments, wobei das Aktualisieren ein Ergänzen der Blockchain-Struktur des Ursprungsdokuments um den hinzugefügten Block umfasst. Nach Ausführungsformen umfasst das Verfahren ferner: auf das Hinzufügen des zusätzlichen Blocks zu der kopierten Blockchain-Struktur der ersten Kopiervorlage hin, Aktualisieren der Blockchain-Strukturen des Ursprungsdokuments, wobei das Aktualisieren ein Ergänzen der Blockchain-Struktur des Ursprungsdokuments um den zusätzlichen Block umfasst.

Ausführungsformen können den Vorteil haben, dass die Blockchain-Struktur des Ursprungsdokuments die vollständigen Abstammungshistorien aller Kopien wiedergibt, welche auf Basis des Ursprungsdokuments erstellt wurden.

Nach Ausführungsformen handelt es sich bei den Blockchain-Strukturen jeweils um eine bidirektional verkettete Blockchain-Struktur und das Hinzufügen eines Blocks zu den Blockchain-Strukturen im Zuge eines Kopiervorgangs umfasst ferner jeweils:
- Bereitstellen einer kopiervorgangsunabhängigen Verkettungsfunktion,
- Ableiten einer kopiervorgangsindividuellen bidirektionalen Verkettungsfunktion aus der kopiervorgangsunabhängigen Verkettungsfunktion,
   wobei für das Ableiten ein Dateninhalt der Kopie, welche im Zuge eines Kopiervorgangs erstellt wird, als ein erster Parameter und ein Dateninhalt der Kopiervorlage, welche für den Kopiervorgang verwendet wird, als ein zweiter Parameter verwendet werden, sodass die kopiervorgangsindividuelle bidirektionale Verkettungsfunktion paarweise sowohl von der erstellten Kopie als auch von der verwendeten Kopiervorlage abhängig ist,
- bidirektionales Verketten des hinzuzufügenden Blocks mit dem zuletzt hinzugefügten Block der entsprechenden Blockchain-Struktur.

Unter einer kopiervorgangsunabhängigen Verkettungsfunktion wird hier eine Funktion zum Erzeugen bzw. Ableiten einer Prüffunktion verstanden. Unter einer kopiervorgangsindividuellen Verkettungsfunktion wird eine aus einer kopiervorgangsunabhängigen Verkettungsfunktion erzeugte bzw. abgeleitete Prüffunktion verstanden, welche von den kopierten Daten eines Kopiervorgangs abhängt.

Handelt es sich bei der kopiervorgangsunabhängigen Verkettungsfunktion um eine Funktion zum Erzeugen einer unidirektionalen Prüffunktion, umfasst die kopiervorgangsunabhängige Verkettungsfunktion zumindest einen Parameter, welcher abhängig ist von ersten Daten. Durch das Hinzufügen der Prüffunktion und/oder das Anwenden der Prüffunktion zu bzw. auf zweite Daten wird eine unidirektionale Verknüpfung zwischen den ersten und den zweiten Daten erzeugt. Anhand der zweiten Daten, zu welchen die Prüffunktion hinzugefügt wurde und/oder auf die die Prüffunktion angewendet wurde, kann die Integrität der ersten Daten geprüft werden. Hierzu wird beispielsweise unter Verwendung der ersten Daten eine zusätzliche Prüffunktion berechnet und diese mit der von den zweiten Daten bereitgestellten Prüffunktion verglichen. Stimmen beide Prüffunktionen überein, ist die Integrität der ersten Daten gewahrt. Insbesondere kann eine solche unidirektionale Prüffunktion daher zum Erzeugen einer unidirektional verkettenden Blockchain-Struktur verwendet werden. Bei den ersten Daten handelt es sich beispielsweise um Daten einer Kopiervorlage, welche für einen Kopiervorgang verwendet wurde, und bei den zweiten um Daten eine aus dem Kopiervorgang resultierende Kopie von Daten der Kopiervorlage. Die unidirektionale Prüffunktion wird beispielsweise hinzugefügt zu oder angewendet auf einen zusätzlichen Block der Blockchain-Struktur, welcher zu der erstellen Kopie hinzugefügt wird. Ferner kann die unidirektionale Prüffunktion nach Ausführungsformen auf die erstellte Kopie angewendet werden.

Handelt es sich bei der kopiervorgangsunabhängigen Verkettungsfunktion um eine Funktion zum Erzeugen einer bidirektionalen Prüffunktion, umfasst die kopiervorgangsunabhängige Verkettungsfunktion zumindest zwei Parameter. Alternativ umfasst die kopiervorgangsunabhängige Verkettungsfunktion zumindest einen Parameter, welcher das Ergebnis einer Verknüpfung eines ersten mit einem zweiten Parameter ist.

Eine bidirektionale Prüffunktion, d.h. eine kopiervorgangsindividuelle Verkettungsfunktion, umfasst somit beispielsweise zumindest einen ersten Parameter, welcher von ersten Daten abhängig ist, und einen zweiten Parameter, welcher von zweiten Daten abhängig ist. Alternativ umfasst die bidirektionale Prüffunktion einen Parameter, welcher das Ergebnis einer Verknüpfung eines von den ersten Daten abhängigen ersten Parameters und eines von den zweiten Daten abhängigen zweiten Parameters ist. Durch das Hinzufügen der Prüffunktion und/oder das Anwenden der Prüffunktion zu bzw. auf die ersten Daten ebenso wie zu bzw. auf die zweiten Daten wird eine bidirektionale Verknüpfung zwischen den ersten und den zweiten Daten erzeugt. Anhand der zweiten Daten kann somit die Integrität der ersten Daten überprüft werden und anhand der ersten Daten die Integrität der zweiten Daten. Hierzu wird beispielsweise unter Verwendung der ersten Daten und der zweiten Daten eine zusätzliche Prüffunktion berechnet und diese mit der bereitgestellten Prüffunktion verglichen. Stimmen die berechnete und die bereitgestellte Prüffunktionen überein, ist die Integrität der ersten und zweiten Daten gewahrt.

Insbesondere kann eine solche bidirektionale Prüffunktion zum Erzeugen einer bidirektional verkettenden Blockchain-Struktur verwendet werden. Bei den ersten Daten handelt es sich beispielsweise um Daten einer Kopiervorlage, welche für einen Kopiervorgang verwendet wurde, und bei den zweiten Daten eine aus dem Kopiervorgang resultierende Kopie von Daten der Kopiervorlage. Die bidirektionale Prüffunktion wird beispielsweise hinzugefügt zu oder angewendet auf einen zusätzlichen Block der Blockchain-Struktur, welcher zu der erstellen Kopie hinzugefügt wird. Zudem wird die bidirektionale Prüffunktion beispielsweise hinzugefügt zu oder angewendet auf den Block der Blockchain-Struktur, welcher dem zusätzlichen Block unmittelbar vorangeht. Ferner kann die bidirektionale Prüffunktion nach Ausführungsformen auf die erstellte Kopie und/oder die Kopiervorlage angewendet werden.

Nach Ausführungsformen kann das Verfahren bei Verwendung einer bidirektionale Prüffunktion zum bidirektionalen Verketten ferner umfassen: Aktualisieren der Blockchain-Struktur der Kopiervorlage, welche für die Erstellung der Kopie verwendet wurde. Dabei umfasst das Aktualisieren ein Hinzufügen der Prüffunktion zu oder Anwenden auf den letzten Block der Blockchain-Struktur der Kopiervorlage. Im Ergebnis entspricht dieser Block der Kopiervorlage somit dem Block der Blockchain-Struktur der erstellten Kopie, welcher dem zusätzlich hinzugefügten Block unmittelbar vorangeht.

Unter einer bidirektionalen Verkettung zweier Blöcke einer Blockchain-Struktur wird hier eine Transformation beider Blöcke verstanden, wobei die Transformation von Dateninhalten beider Blöcke abhängt, sodass die Transformationsergebnisse der Blöcke Paare bilden, welche gegenseitig voneinander abhängig sind. Wird der Dateninhalt eines der beiden Blöcke geändert, so ändert sich automatisch auch das Transformationsergebnis des zweiten Blocks. Demgegenüber wird unter einer unidirektionalen Verkettung zweier Blöcke eine Transformation eines der beiden Blöcke verstanden, wobei die Transformation vom Dateninhalten des nicht transformierten Blocks abhängt, sodass auch das Transformationsergebnisse vom Dateninhalten des nicht transformierten Blocks abhängt. Wird der Dateninhalt des zu transformierenden Blocks geändert, so hat dies keinen Einfluss auf den nicht zu transformierten Block. Eine Transformation eines Blocks umfasst hier ein Hinzufügen eines Prüfmerkmals, wie beispielsweise einer Prüffunktion, zu dem Inhalt des entsprechenden Blocks. Ferner kann eine Transformation im Falle einer Prüffunktion ein Anwenden der Prüffunktion auf den Inhalt des entsprechenden Blocks umfassen.

Nach Ausführungsformen weisen die Blöcke der resultierenden Blockchain-Struktur somit abgesehen von dem ersten und letzten Block jeweils zwei unterschiedliche kopiervorgangsindividuelle bidirektionale Verkettungsfunktionen auf: Eine Verkettungsfunktion, welche die Verkettung zu dem unmittelbar vorangehenden Block etabliert und eine Verkettungsfunktion, welche die Verkettung zu dem unmittelbar nachfolgenden Block etabliert. Liegen die beiden Verkettungsfunktionen in Form zweier Prüffunktionen vor, so können die beiden Prüffunktionen miteinander verknüpft werden. Bei der Verknüpfung kann es sich beispielsweise um eine arithmetische Verknüpfung, wie Addition, Subtraktion, Multiplikation und/oder Division handeln. Die resultierende Verknüpfung kann dann zu dem entsprechenden Block hinzugefügt oder auf diesen angewendet werden.

Ausführungsformen können den Vorteil haben, dass durch die Verwendung einer kopiervorgangsindividuellen bidirektionalen Verkettungsfunktion nicht nur Manipulationen vorangehender Blöcke der Blockstruktur, wie etwa im Falle bekannter Blockchain-Strukturen, verhindert werden können, sondern darüber hinaus auch Manipulationen nachfolgender Blöcke. Aus der kopiervorgangsunabhängigen Verkettungsfunktion wird eine kopiervorgangsindividuelle Verkettungsfunktion abgeleitet. Mit anderen Worten wird für jeden Kopiervorgang, d. h. für jede individuelle Verbindung zwischen zwei Blöcken der Blockchain-Struktur, jeweils eine kopiervorgangsindividuelle Verkettungsfunktion bereitgestellt, welche unter Verwendung von Dateninhalten beider miteinander zu verbindender Blöcke erzeugt wird. Wird die Blockchain-Struktur beispielsweise abgeschnitten, so wird aus der Verkettung des letzten verbleibenden Blocks der Blockchain-Struktur ersichtlich, dass mindestens ein nachfolgender Block fehlt, d.h. die Blockchain-Struktur unvollständig ist. Beispielsweise umfasst der letzte verbleibende Block eine bidirektionale Verkettungsfunktion, welche von Daten eines abgeschnittenen Blocks der Blockchain-Struktur oder eines dem abgeschnittenen Block zugeordneten Dokuments abhängt. Ausführungsformen können somit die Manipulationssicherheit der Blockchain-Struktur erhöhen. Insbesondere können sie die Manipulationssicherheit im Vergleich zu bekannten unidirektionalen Blockchain-Struktur erhöhen.

Nach Ausführungsformen umfasst das bidirektionale Verketten ein Hinzufügen der kopiervorgangsindividuellen bidirektionalen Verkettungsfunktion als Prüfmerkmal sowohl zu dem hinzuzufügenden Block als auch zu dem zuletzt hinzugefügten Block der entsprechenden Blockchain-Struktur.

Ausführungsformen können den Vorteil haben, dass die kopiervorgangsindividuelle bidirektionale Verkettungsfunktion in beide zu verkettenden Blöcken jeweils aufgenommen wird und somit jeder der beiden Blöcke jeweils die vollständige Verkettungsfunktion umfasst. Wird einer der beiden Blöcke manipuliert, so fällt dies auf Grundlage der mit der Manipulation nicht mehr kompatiblen Verkettungsfunktion des nicht manipulierten Blocks auf.

Nach Ausführungsformen kann es sich bei der bidirektionalen Verkettungsfunktion beispielsweise um eine Hash-Funktion oder eine Kombination von zwei Hash-Funktionen handeln.

Nach Ausführungsformen umfasst das bidirektionale Verketten ein Anwenden der kopiervorgangsindividuellen bidirektionalen Verkettungsfunktion auf die kopierten Daten und ein Hinzufügen des resultierenden Ergebnisses als Prüfmerkmal sowohl zu dem hinzuzufügenden Block als auch zu dem zuletzt hinzugefügten Block der entsprechenden Blockchain-Struktur.

Ausführungsformen können den Vorteil haben, dass durch Anwenden der kopiervorgangsindividuellen bidirektionalen Verkettungsfunktionen die kopierten Daten transformiert werden können. Das Ergebnis einer solchen Transformation kann beispielsweise ein Chiffrat sein, sodass die Daten ohne Kenntnis der Verkettungsfunktion bzw. einer zu der Verkettungsfunktion inversen Funktion nicht in ihre ursprüngliche Form zurücktransformiert werden können. Dies kann insbesondere vorteilhaft sein im Falle von sicherheitssensiblen Daten, welche vor unberechtigten Zugriffen geschützt werden sollen.

Nach Ausführungsformen umfasst das bidirektionale Verketten ein Anwenden der kopiervorgangsindividuellen bidirektionalen Verkettungsfunktion auf die kopierten Daten und ein Hinzufügen der kopiervorgangsindividuellen bidirektionalen Verkettungsfunktion als Prüfmerkmal sowohl zu dem hinzuzufügenden Block als auch zu dem zuletzt hinzugefügten Block der entsprechenden Blockchain-Struktur. Nach Ausführungsformen umfasst das bidirektionale Verketten ferner ein Anwenden der kopiervorgangsindividuellen bidirektionalen Verkettungsfunktion auf die als Kopiervorlage dienenden Daten.

Nach Ausführungsformen wird zumindest eine der Blockchain-Strukturen durch eine verkürzte Blockchain-Struktur ersetzt, wobei die verkürzte Blockchain-Struktur um zumindest ein inneres Kettensegment der Blockchain-Struktur verkürzt ist, wobei das innere Kettensegment zumindest einen Block umfasst, und wobei zwei direkte Nachbarblöcke, zwischen denen das innere Kettensegment entnommen wurde, mit einer bidirektionalen Verkettungsfunktion verketten werden, welche eine Kombination aller kopiervorgangsindividuellen bidirektionalen Verkettungsfunktionen der Blöcke des inneren Kettensegments umfassen.

Ausführungsformen können den Vorteil haben, dass die Blockchain-Struktur verkürzt werden kann, ohne dass die Informationen über die Verkettungen der entnommenen Blöcke verloren gehen. Bei der Kombination der kopiervorgangsindividuellen bidirektionalen Verkettungsfunktionen der Blöcke des inneren Verkettungssegments kann es sich beispielsweise um Verknüpfungen, wie etwa arithmetische Verknüpfungen, handeln. Solch arithmetische Verknüpfungen können beispielsweise Addition, Subtraktion, Multiplikation und/oder Division umfassen. Die kopiervorgangsindividuellen bidirektionalen Verkettungsfunktionen sind jeweils von Dateninhalten der Blöcke, welche sie verketten, bzw. von Dateninhalten, welchen diese Blöcke eindeutig zugeordnet sind, abhängig. Als Kombination aller kopiervorgangsindividuellen bidirektionalen Verkettungsfunktionen der Blöcke des inneren Kettensegments umfasst die bidirektionale Verkettungsfunktion, welche die beiden nach der Entnahme des inneren Kettensegments verbleibenden losen Enden des Blockchain-Strangs miteinander verkettet, somit Informationen über alle Dateninhalte aller zwischen den losen Enden entnommenen Blöcke des inneren Kettensegments.

Ausführungsformen können den Vorteil haben, dass durch Verkürzen der Blockchain-Struktur beispielsweise Speicherplatz gespart werden kann. Dies kann insbesondere vorteilhaft sein, wenn die entsprechenden Blockchain-Strukturen in den Dokumenten selbst integriert sind. Hiermit kann verhindert werden, dass bei einer Vielzahl von Kopiervorgängen die von den Dokumenten umfassten Datenmengen zu groß werden.

Nach Ausführungsformen wird für eine Integritätsprüfung einer Kopie unter Verwendung der verkürzten Blockchain-Struktur das entnommene innere Kettensegment bereitgestellt. Anhand der bidirektionalen Verkettungsfunktion, welche die beiden Blöcke verkettet, zwischen denen das innere Kettensegment entnommen wurde, kann durch Abgleich mit dem bereitgestellten inneren Kettensegment geprüft werden, ob es sich bei dem bereitgestellten inneren Kettensegment tatsächlich um das entnommene innere Kettensegment handelt. Hierzu wird beispielsweise eine Kombination aller kopiervorgangsindividuellen bidirektionalen Verkettungsfunktionen der Blöcke des bereitgestellten inneren Kettensegments erzeugt und mit der bidirektionalen Verkettungsfunktion, welche die beiden Blöcke verkettet, zwischen denen das innere Kettensegment entnommen wurde, verglichen. Bei einer Übereinstimmung ist das bereitgestellte innere Kettensegment identisch mit dem entnommenen inneren Kettensegment. Die verkürzte Blockchain-Strukturen kann dann unter Verwendung des bereitgestellten inneren Kettensegments vervollständigt werden. Somit kann eine Integritätsprüfung unter Verwendung der vollständigen Blockchain-Strukturen, d. h. unter Berücksichtigung der vollständigen Abstammungshistorie einer Kopie, ausgeführt werden. Das entnommene innere Kettensegment wird beispielsweise von einem Server zum Abruf, etwa über das Internet, bereitgestellt. Bei dem Server kann es sich beispielsweise um einen Server des Inhabers bzw. Erzeugers des Ursprungsdokuments oder einer unabhängigen Instanz handeln.

Nach Ausführungsformen handelt es sich bei den beiden direkten Nachbarblöcken, zwischen denen das innere Kettensegment entnommen wurde, um den Block, welcher dem Ursprungsdokument zugeordnet ist, und den zuletzt hinzugefügten Block der Blockchain-Struktur. Ausführungsformen können den Vorteil haben, dass die resultierende Blockchain-Struktur auf eine minimale Länge verkürzt ist, sodass sie ein Minimum an Speicherplatz beansprucht.

Nach Ausführungsformen umfasst das Verfahren ferner: Auf das Verkürzen der Blockchain-Struktur hin, Aktualisieren der Blockchain-Strukturen aller Kopien, welche die Abstammungshistorie der Kopie mit der verkürzten Blockchain-Struktur umfasst, wobei das Aktualisieren jeweils ein Verkürzen der entsprechenden Blockchain-Struktur umfasst. Nach Ausführungsformen umfasst das Verkürzen ein Verkürzen um das identische innere Kettensegment. Nach Ausführungsformen umfasst das Verkürzen ein Verkürzen um alle Blöcke des inneren Kettensegments, welche die entsprechende Blockchain-Struktur umfasst, mit Ausnahme des letzten Blocks der entsprechenden Blockchain-Struktur. Nach Ausführungsformen wird eine Blockchain-Struktur des Ursprungsdokuments in analoger Weise verkürzt.

Nach Ausführungsformen umfasst das Verfahren ferner eine Integritätsprüfung der ersten Kopie, wobei die Prüfung umfasst:
- Zugreifen auf das Ursprungsdokument,
- Erzeugen eines Referenzmerkmals für das Prüfmerkmal des zusätzlichen Blocks unter Verwendung des Ursprungsdokuments und der von der Blockchain-Struktur der ersten Kopie protokollierten Abstammungshistorie der ersten Kopie,
- Vergleichen des Referenzmerkmals mit dem Prüfmerkmal des zusätzlichen Blocks,
- im Fall einer Übereinstimmung des Referenzmerkmals mit dem Prüfmerkmal, Bestätigen der Integrität der ersten Kopie.

Ausführungsformen können den Vorteil haben, dass geprüft werden kann, ob die Protokollierung der Abstammungshistorie und damit der Generierung einer vorliegenden Kopie von Daten eines Ursprungsdokuments vollständig und unverändert ist. Ferner kann anhand des Ursprungsdokuments überprüft werden, ob Kopien der Abstammungshistorie, welche zum Prüfen einer vorliegenden Kopie von Daten des Ursprungsdokuments bereitgestellt werden, unverfälscht sind. Schließlich kann anhand des bereitgestellten Ursprungsdokuments und/oder Kopien der Abstammungshistorie überprüft werden, ob die Daten der vorliegenden Kopie unverfälscht, d. h. authentisch, sind oder nicht. Zudem kann im Fall von Änderungen festgestellt werden, an welcher Stelle der Abstammungshistorie eine Veränderung der Daten vorgenommen wurde. Im Fall einer Übereinstimmung des Referenzmerkmals mit dem Prüfmerkmal kann ferner auf die Integrität der protokollierten Abstammungshistorie der ersten Kopie geschlossen werden. Nach Ausführungsformen kann die Integrität der aus dem Ursprungsdokument stammenden Daten der ersten Kopie auch durch einen Vergleich zwischen dem bereitgestellten Dokument und der Kopie erfolgen, wobei beispielsweise jeweils ein Hash-Wert der zu vergleichenden Daten berechnet und die Ergebnisse miteinander verglichen werden.

Nach Ausführungsformen umfasst das Verfahren ferner eine Integritätsprüfung der Blockchain-Struktur der ersten Kopie, wobei die Prüfung umfasst:
- Prüfen der Konsistenz der Blockchain-Struktur der ersten Kopie unter Verwendung der kopierten Daten des Ursprungsdokuments,
- Prüfen der Existenz der in der Abstammungshistorie der ersten Kopie protokollierten Kopiervorlagen,
- im Fall eines positiven Ergebnisses der Konsistenzprüfung sowie der Existenzprüfung, Bestätigen der Integrität der Abstammungshistorie der ersten Kopie.

Ausführungsformen können den Vorteil haben, dass geprüft werden kann, ob die Protokollierung der Abstammungshistorie in sich konsistent ist und Sachverhalte der realen Welt korrekt abgebildet, d.h. ob sich die Abstammungshistorie auf tatsächlich existente Kopiervorlagen stützt.

Nach Ausführungsformen umfasst die Integritätsprüfung der ersten Kopie:
- Zugreifen auf eine der Kopien, welche die Abstammungshistorie der ersten Kopie umfasst, die die Blockchain-Struktur der ersten Kopie protokolliert,
- Erzeugen eines Referenzmerkmals für das Prüfmerkmal des zusätzlichen Blocks unter Verwendung der Kopie, auf welche zugegriffen wird, und der protokollierten Abstammungshistorie der ersten Kopie,
- Vergleichen des Referenzmerkmals mit dem Prüfmerkmal des zusätzlichen Blocks,
- im Fall einer Übereinstimmung des Referenzmerkmals mit dem Prüfmerkmal, Bestätigen der Integrität der ersten Kopie im Verhältnis zu der Kopie, auf welche zugegriffen wurde.

Ausführungsformen könne den Vorteil haben, dass die Integrität der ersten Kopie im Verhältnis zu einer beliebigen Kopie der Abstammungshistorie geprüft werden kann. Bei der Kopie, auf welche zum Zwecke der Integritätsprüfung zugegriffen wird, handelt es sich beispielsweise um eine vertrauenswürdige Kopie bzw. um eine Kopie, welche von einer vertrauenswürdigen Instanz, wie etwa einer vertrauenswürdigen Website und/oder Plattform, bereitgestellt wird. Beispielsweise handelt es sich um eine offizielle Website einer allgemein anerkannten Instanz, von welcher bekannt ist, dass eine dort bereitgestellte Kopie vor der Bereitstellung sorgfältig auf ihre Integrität geprüft wurde. In einem solchen Fall kann auf Basis der Integrität der ersten Kopie im Verhältnis zu der vertrauenswürdigen Kopie, auf welche zugegriffen wurde, zusätzlich auf die Integrität der ersten Kopie gegenüber dem Ursprungsdokument geschlossen werden. Die vertrauenswürdige Kopie, auf welche zugegriffen wird, bildet somit einen Vertrauensanker.

Nach Ausführungsformen wird im Fall einer fehlenden Übereinstimmung des Referenzmerkmals mit dem Prüfmerkmal die Integrität der ersten Kopie verneint.

Nach Ausführungsformen umfasst das Verfahren ferner eine Integritätsprüfung der zweiten Kopie. Die Integritätsprüfung der zweiten Kopie wird beispielswiese analog zur Integritätsprüfung der ersten Kopie ausgeführt.

Nach Ausführungsformen umfasst das Verfahren ferner eine Integritätsprüfung aller Kopien der Abstammungshistorie der ersten Kopie. Die Integritätsprüfungen werden beispielswiese analog zur Integritätsprüfung der ersten Kopie ausgeführt.

Nach Ausführungsformen umfasst das Verfahren ferner eine Integritätsprüfung der protokollierten Abstammungshistorie der ersten Kopie, wobei die Prüfung umfasst:
- Zugreifen auf das Ursprungsdokument sowie die Kopien, welche die Abstammungshistorie der ersten Kopie umfasst, die die Blockchain-Struktur der ersten Kopie protokolliert,
- Erzeugen von Referenzmerkmalen für die Prüfmerkmale der einzelnen Blöcke der Blockchain-Struktur der ersten Kopie unter Verwendung des Ursprungsdokuments sowie der Kopien, auf welche zugegriffen wird,
- Vergleichen der Prüfmerkmale der einzelnen Blöcke mit dem für das jeweilige Prüfmerkmal erzeugten Referenzmerkmal,
- im Fall einer Übereinstimmung der Prüfmerkmale mit den jeweiligen Referenzmerkmalen, Bestätigen der Integrität der protokollierten Abstammungshistorie der ersten Kopie.

Ausführungsformen könne den Vorteil haben, dass anhand eines detaillierten Vergleich der einzelnen Blöcke der Blockchain-Struktur der ersten Kopie die Integrität der protokollierten Abstammungshistorie, welche in Form der Blöcke bereitgestellt wird, effektiv geprüft werden kann.

Nach Ausführungsformen wird im Fall einer fehlenden Übereinstimmung eines der Prüfmerkmale mit dem für das jeweilige Prüfmerkmal erzeugten Referenzmerkmal die Integrität der protokollierten Abstammungshistorie der ersten Kopie verneint.

Nach Ausführungsformen umfasst das Verfahren ferner eine Integritätsprüfung der protokollierten Abstammungshistorie der zweiten Kopie. Die Integritätsprüfung der Abstammungshistorie der zweiten Kopie wird beispielswiese analog zur Integritätsprüfung der Abstammungshistorie der ersten Kopie ausgeführt.

Nach Ausführungsformen umfasst das Verfahren ferner eine Integritätsprüfung der Abstammungshistorien aller Kopien der Abstammungshistorie der ersten Kopie. Die Integritätsprüfungen werden beispielswiese analog zur Integritätsprüfung der Abstammungshistorie der ersten Kopie ausgeführt.

Nach Ausführungsformen umfassen die Prüfmerkmale jeweils einen Hashwert der kopierten Daten. Ausführungsformen können den Vorteil haben, dass ein effizientes Verfahren zur Bildung eines Prüfmerkmals bereitgestellt wird, mittels dessen eine Unverfälschtheit aller gehashter Daten sicher überprüfen lässt.

Nach Ausführungsformen umfassen die Identifikatoren der Kopiervorlagen jeweils eine Adresse zum Aufrufen der entsprechenden Kopiervorlage. Ausführungsformen können den Vorteil haben, dass durch Bereitstellen der Adressen zum Abrufen der Kopiervorlagen in Form der Identifikatoren der Blockchain-Strukturen ein effizienter Zugriff auf alle Kopiervorlagen der Abstammungshistorie bereitgestellt werden kann, sodass eine effiziente und effektive Überprüfung der Integrität einer vorliegenden Kopie sowie der für diese protokollierten Abstammungshistorie ermöglicht wird.

Beispielsweise kann eine entsprechende Integritätsprüfung automatisiert im Hintergrund ablaufen, wenn eine entsprechende Kopie geöffnet wird. Insbesondere kann eine entsprechende Blockchain-Struktur als Metadaten, beispielsweise in den Text eines digital codierten Dokuments integriert sein. Ausführungsformen können den Vorteil haben, dass die Blockchain-Struktur beim Lesen, Ansehen und/oder Hören des entsprechenden digital codierten Dokuments zu keiner Störung führt. Das Ergebnis der Integritätsprüfung wird beispielsweise nur angezeigt, wenn dieses negativ ausfällt und es Zweifel an der Integrität eines vorliegenden digital codierten Dokuments gibt. In diesem Fall kann das Ergebnis als ein Warnhinweis angezeigt werden. Nach weiteren Ausführungsformen wird das Ergebnis der Integritätsprüfung beispielsweise nur angezeigt, wenn dieses positiv ausfällt. Nach weiteren Ausführungsformen umfasst das angezeigte Ergebnis beispielsweise die Identifikatoren aller Kopiervorlagen der Abstammungshistorie.

Ausführungsformen umfassen ferner ein Verfahren zum integritätssicheren Speichern von digital codierten Daten. Das Verfahren umfasst:
- Erstellen eines digital codierten Dokuments, welches die zu speichernden digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt wird,
- Speichern des digital codierten Dokuments in einem Datenspeicher.

Nach Ausführungsformen umfasst der Datenspeicher ein Dateisystem. Das Dateisystem stellt eine Ablageorganisation auf dem Datenspeicher bereit. Digital codierte Dokumente können als Dateien auf dem Datenspeicher gespeichert werden. Ferner können die Dateien gelesen, verändert oder gelöscht werden.

Nach Ausführungsformen umfasst der Datenspeicher eine Datenbank. Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw. Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten. Digital codierten Dokument wird in diesem Fall beispielsweise als Teil der Datenbasis gespeichert.

Bei dem Datenspeicher kann es sich beispielsweise um einen Wechselspeicher handeln, d.h. einen nicht fest eingebauter, austauschbarer und/oder tragbarer Datenträger für ein Computersystem handeln. Wechselspeicher umfassen beispielsweise Blu-ray Discs, CDs, Disketten, DVDs, HD-DVDs, Magnetbänder, MO/MODs, Solid-State-Drives (SSD), Speicherkarten, USB-Sticks oder Wechselfestplatten.

Ausführungsformen umfassen ferner ein Verfahren zum integritätssicheren Versenden von digital codierten Daten über ein Netzwerk. Das Verfahren umfasst:
- Erstellen eines digital codierten Dokuments, welches die zu versendenden digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt wird,
- Versenden des digital codierten Dokuments über das Netzwerk.

Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln. Ferner kann es sich bei dem beispielsweise um ein digitales zellulares Mobilfunknetzwerk handeln.

Nach Ausführungsformen erfolgt das Versenden des digital codierten Dokuments auf einen Empfang einer Anforderung zum Versenden. Beispielsweise handelt es sich bei dem digital codierten Dokument um ein HTML-Dokument. Beispielsweise wird das digital codierten Dokument auf einer Internet-Plattform bereitgestellt, etwa als Webseite oder als Posting. Unter einem Posting wird hier ein einzelner Beitrag auf einer Internet-Plattform, wie etwa einer Social-Media-Plattform, in einem Webforum oder einem Blog verstanden. Ferner kann das digital codierten Dokument zum Download bereitgestellt sein. Beispielsweise umfasst eine Webseite oder ein Posting einen Link zum Aufrufen des digital codierten Dokuments.

Auf eine entsprechende Anforderung hin, etwa in Form einer HTTP-GET-Anforderung, wird das digital codierten Dokument an das anfordernde Computersystem versendet.

Nach Ausführungsformen erfolgt das Versenden des digital codierten Dokuments unabhängig von einer Anforderung zum Versenden. Beispielsweise wird das Dokument in Form einer E-Mail, einer Instant-Massage, einer Tonnachricht, einer Videonachricht, einer Bildnachricht, einer SMS oder einer MMS versendet bzw. von einem der zuvor genannten Nachrichtentypen umfasst. Instant Messaging bezeichnet eine Kommunikationsmethode, bei der zwei oder mehr Teilnehmer per digital codierter Text-, Sprach-, Bild- und/oder Videonachrichten miteinander kommunizieren. Dabei löst der Absender die Übermittlung der Nachricht aus, d.h. ein sog. Push-Verfahren findet Anwendung, so dass die Nachrichten möglichst unmittelbar bei dem vorgesehenen Empfänger ankommen. Die Teilnehmer sind dabei mittels eines Computerprogramms über ein Netzwerk, wie etwa das Internet, direkt oder über einen Server miteinander verbunden sein.

Ausführungsformen umfassen ferner ein Verfahren zum integritätssicheren Anfordern von digital codierten Daten über ein Netzwerk. Das Verfahren umfasst:
- Anfordern eines digital codierten Dokuments über das Netzwerk, wobei das digital codierte Dokument die digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt wurde,
- in Antwort auf das Anfordern, Empfangen des angeforderten digital codierten Dokuments über das Netzwerk.

Auf eine entsprechende Anforderung hin wird beispielsweise das zuvor genannte Verfahren zum integritätssicheren Versenden von digital codierten Daten initiiert.

Ausführungsformen umfassen ferner ein Computersystem zur Integritätssicherung digital codierter Kopien eines digital codierten Ursprungsdokuments unter Verwendung einer in die Kopien integrierten Blockchain-Struktur zur Protokollierung der Abstammungshistorie der Kopien. Das Computersystem umfasst einen Prozessor und einen Speicher mit maschinenlesbaren Instruktionen, wobei ein Ausführen der maschinenlesbaren Instruktionen durch den Prozessor das Computersystem dazu veranlasst, ein Verfahren auszuführen, welches umfasst:
- Bereitstellen einer Kopiervorlage, welche Daten des digital codierten Ursprungsdokuments und eine Blockchain-Struktur umfasst, in der die Abstammungshistorie der Kopiervorlage protokolliert ist,
- Erstellen einer digital codierten Kopie von Daten einer digital codierten Kopiervorlage, wobei die kopierten Daten die Daten des digital codierten Ursprungsdokuments und die Blockchain-Struktur der Kopiervorlage umfassen,
- Hinzufügen eines zusätzlichen Blocks zu der kopierten Blockchain-Struktur, wobei der zusätzliche Block, welcher der Kopiervorlage zugeordnet ist, einen Identifikator der Kopiervorlage und ein Prüfmerkmal der kopierten Daten umfasst, welcher eine Integritätsprüfung der kopierten Daten inklusive der kopierten Blockchain-Struktur ermöglicht.

Nach Ausführungsformen ist das Computersystems dazu konfiguriert eine oder mehrere der zuvor genannten Ausführungsformen des Verfahrens zur Integritätssicherung digital codierter Kopien auszuführen.

Unter einem "Computersystem" wird hier ein Gerät verstanden, welches mittels programmierbarer Rechenvorschriften unter Verwendung elektronischer Schaltkreise Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computersystem kann eine Schnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um beispielsweise um eine Smartwatch oder Smartglasses handeln. Zudem kann es sich um ein stationäres Computersystem, wie beispielsweise einen Personal Computer oder einen in einer Client-Server-Umgebung eingebundenen Server handeln. Insbesondere kann es sich um einen Server mit einem Datenbankmanagementsystem, welcher eine Datenbank mit einer Daten verwaltet.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann.

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln.

Ausführungsformen umfassen ferner ein elektronisches Datenspeichersystem zum integritätssicheren Speichern von digital codierten Daten. Das Datenspeichersystem umfasst einen Prozessor und einen Speicher mit maschinenlesbaren Instruktionen. Ausführen der maschinenlesbaren Instruktionen durch den Prozessor das Datenspeichersystem dazu veranlasst, ein Verfahren auszuführen, welches umfasst:
- Erstellen eines digital codierten Dokuments, welches die zu speichernden digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt wird,
- Speichern des digital codierten Dokuments in einem Speicher des elektronischen Datenspeichersystems.

Bei dem elektronischen Datenspeichersystem handelt es sich beispielsweise um ein Computersystem mit einem Dateisystem und/oder einer Datenbank. Ausführungsformen umfassen ferner ein Telekommunikationssystem zum integritätssicheren Versenden von digital codierten Daten über ein Netzwerk. Das Telekommunikationssystem umfasst einen Prozessor und einen Speicher mit maschinenlesbaren Instruktionen. Das Telekommunikationssystem umfasst ferner eine Kommunikationsschnittstelle zur Kommunikation über das Netzwerk. Ausführen der maschinenlesbaren Instruktionen durch den Prozessor veranlasst das Telekommunikationssystem dazu, ein Verfahren auszuführen, welches umfasst:
- Erstellen eines digital codierten Dokuments, welches die zu versendenden digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt wird,
- Versenden des digital codierten Dokuments über das Netzwerk.

Bei dem Telekommunikationssystem handelt es sich beispielsweise um ein mobiles tragbares Telekommunikationssystem bzw. Computersystem.

Ausführungsformen umfassen ferner ein Telekommunikationssystem zum integritätssicheren Aufrufen von digital codierten Daten über ein Netzwerk, einen Prozessor und einen Speicher mit maschinenlesbaren Instruktionen. Das Telekommunikationssystem umfasst ferner eine Kommunikationsschnittstelle zur Kommunikation über das Netzwerk. Ausführen der maschinenlesbaren Instruktionen durch den Prozessor veranlasst das Telekommunikationssystem dazu, ein Verfahren auszuführen, welches umfasst:
- Anfordern eines digital codierten Dokuments über das Netzwerk, wobei das digital codierte Dokument die digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt wurde,
- in Antwort auf das Anfordern, Empfangen des angeforderten digital codierten Dokuments über das Netzwerk.

Die zuvor genannten Telekommunikationssysteme zum Anfordern und Versenden digital codierten Daten über ein Netzwerk bilden beispielsweise zusammen ein System, über welches digital codierten Daten zwischen den einzelnen Telekommunikationssystemen angefordert und versendet werden können.

Im Weiteren werden Ausführungsformen der Erfindung mit Bezugnahme auf die Zeichnungen näher erläutert. Es zeigen:
- Figur 1: ein schematisches Blockdiagramm erster Ausführungsformen exemplarischer digital codierter Dokumente,
- Figur 2: ein schematisches Blockdiagramm zweiter Ausführungsformen exemplarischer digital codierter Dokumente,
- Figur 3: ein schematisches Blockdiagramm dritter Ausführungsformen exemplarischer digital codierter Dokumente,
- Figur 4: ein schematisches Blockdiagramm vierter Ausführungsformen exemplarischer digital codierter Dokumente,
- Figur 5: ein schematisches Blockdiagramm einer fünften Ausführungsform eines exemplarischen digital codierten Dokuments,
- Figur 6: ein schematisches Blockdiagramm einer sechsten Ausführungsform eines exemplarischen digital codierten Dokuments,
- Figur 7: ein schematisches Blockdiagramm einer siebten Ausführungsform eines exemplarischen digital codierten Dokuments,
- Figur 8: ein schematisches Blockdiagramm einer achten Ausführungsform eines exemplarischen digital codierten Dokuments,
- Figur 9: ein schematisches Flussdiagramm eines exemplarischen Verfahrens zum Erstellen einer bidirektionalen Blockchain-Struktur,
- Figur 10: ein schematisches Flussdiagramm eines exemplarischen Verfahrens zum Erstellen einer verkürzten bidirektionalen Blockchain-Struktur,
- Figuren 11: schematische Blockdiagramme von Ausführungsform exemplarischer Computersysteme,
- Figur 12: ein schematisches Flussdiagramm einer ersten Ausführungsform eines exemplarischen Verfahrens,
- Figur 13: ein exemplarisches Flussdiagramm einer zweiten Ausführungsform eines exemplarischen Verfahrens,
- Figur 14: ein exemplarisches Flussdiagramm einer dritten Ausführungsform eines exemplarischen Verfahrens,
- Figur 15: ein schematisches Flussdiagramm einer vierten Ausführungsform eines exemplarischen Verfahrens,
- Figur 16: ein schematisches Flussdiagramm einer fünften Ausführungsform eines exemplarischen Verfahrens und
- Figur 17: ein schematisches Flussdiagramm einer sechsten Ausführungsform eines exemplarischen Verfahrens.

Elemente der nachfolgenden Ausführungsformen, die einander entsprechen, werden mit denselben Bezugszeichen gekennzeichnet.

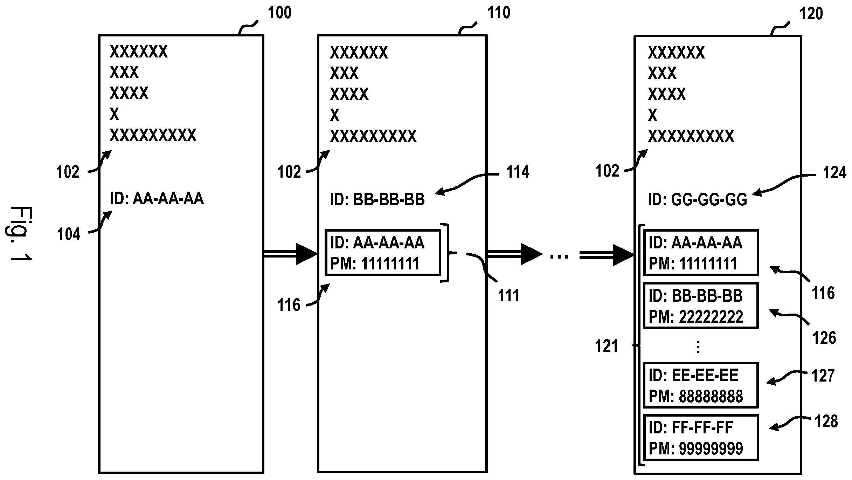

Figur 1 zeigt eine exemplarische Abstammungshistorie digital codierter Dokumente 100, 110, 120. Das digital codierte Ursprungsdokument 100 umfasst Daten 102, beispielsweise in Textform. Ferner ist dem Ursprungsdokument 100 ein eindeutiger Identifikator 104 zugeordnet. Dieser Identifikator ID 104 kann nach Ausführungsformen in das Ursprungsdokument 100 integriert sein. Durch einen ersten Kopiervorgang wird eine Kopie 110 des Ursprungsdokuments 100 erstellt, welche die Daten 102 des Ursprungsdokuments 100 umfasst. Der Kopie ist ein eindeutiger Identifikator 114 zugeordnet. Ferner wird zu der Kopie 110 ein Block 116 einer Blockchain-Struktur 111 hinzugefügt. Dieser Block 116 umfasst den Identifikator 104 des Ursprungsdokuments 100. Ferner umfasst der Block ein Prüfmerkmal PM der kopierten Daten 102. Anhand des Prüfmerkmals kann geprüft werden, ob die von der Kopie 110 umfassten Daten identisch mit den ursprünglichen Daten 102 des Ursprungsdokuments 100 sind. Beispielsweise kann das Prüfmerkmal einen Hashwert der Daten 102 umfassen.

Bei jedem Kopiervorgang wird ein zusätzliches digital codiertes Dokument als Kopie der Daten 102 des Ursprungsdokuments 100 erzeugt. Diese jeweilige zusätzliche Kopie umfasst die Daten 102 des Ursprungsdokuments 100, wie sie von der für den entsprechenden Kopiervorgang verwendeten Kopiervorlage bereitgestellt werden. Ferner umfasst die Kopie eine Kopie der Blockchain-Struktur der verwendeten Kopiervorlage. Die kopierte Blockchain-Struktur wird um einen zusätzlichen Block erweitert. Dieser zusätzliche Block der Blockchain-Struktur umfasst jeweils einen Identifikator der verwendeten Kopiervorlage sowie ein Prüfmerkmal der kopierten Daten der verwendeten Kopiervorlage. Nach Ausführungsformen umfasst das Prüfmerkmal ferner den letzten Block der Blockchain-Struktur der verwendeten Kopiervorlage. Nach einer weiteren Ausführungsform umfasst das Prüfmerkmal ferner die vollständige Blockchain-Struktur der verwendeten Kopiervorlage.

Somit wächst die Blockchain-Struktur der Kopien mit jeder Generation, d. h. jedem Kopiervorgang um einen zusätzlichen Block an. Eine N-te Kopie 120 des Ursprungsdokuments 100, welche das Resultat von N Kopiervorgängen ist, umfasst beispielsweise die kopierten Daten 102 des Ursprungsdokuments 100. Ferner ist der Kopie 120 ein eindeutiger Identifikator 124 zugeordnet. Zudem umfasst die Kopie eine Blockchain-Struktur 121, welche beispielsweise N Blöcke 116, 126, 127, 128 für die N Kopiervorgänge umfasst. Jeder dieser Blöcke umfasst jeweils einen Identifikator ID der für den entsprechenden Kopiervorgang verwendeten Kopiervorlage sowie ein Prüfmerkmal PM der verwendeten Kopiervorlage. Dieses Prüfmerkmal umfasst nach Ausführungsformen die kopierten Daten 102 sowie zumindest den letzten Block der Blockchain-Struktur der verwendeten Kopiervorlage. Umfassen heißt in diesem Zusammenhang, dass das Prüfmerkmal sowohl von den kopierten Daten 102 als auch dem letzten Block der Blockchain-Struktur der verwendeten Kopiervorlage abhängt bzw. diese eindeutig festlegt. Nach weiteren Ausführungsformen umfasst das Prüfmerkmal die verwendete Kopiervorlage vollständig, d. h. durch das Prüfmerkmal wird eine Prüfung der vollständigen Kopiervorlage auf ihre Integrität ermöglicht. Beispielsweise umfasst das Prüfmerkmal einen Hashwert, der die Nachprüfbarkeit der Integrität gewährleisten soll.

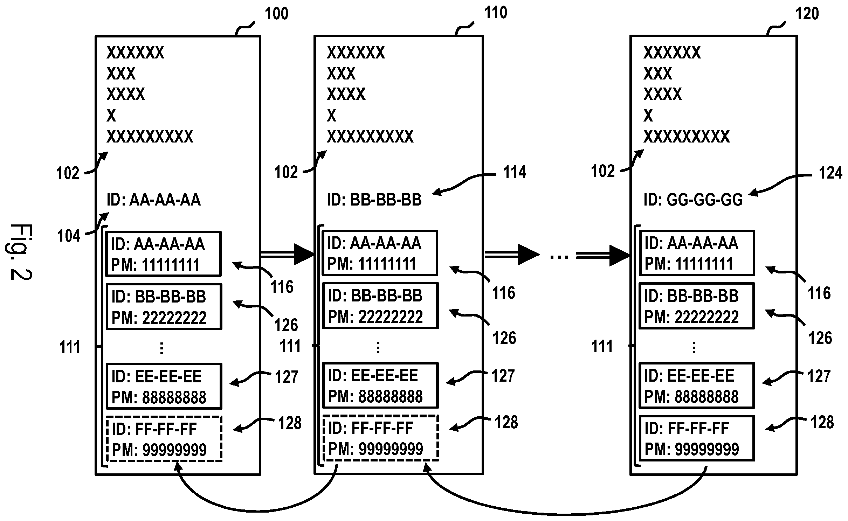

Figur 2 zeigt eine weitere Ausführungsform exemplarischer digital codierter Dokumente, welche durch ein exemplarisches Verfahren zur Integritätssicherung digital codierter Kopien erzeugt wurden. Die gezeigten digital codierten Dokumente 100, 110, 120 entsprechen im Wesentlichen den Dokumenten 100, 110, 120 der Figur 1. Im vorliegenden Fall werden, anders als in Figur 1, beim Erzeugen einer zusätzlichen Kopie die Blockchain-Strukturen aller Kopien bzw. Kopiervorlagen der Abstammungshistorien der zusätzlich erzeugten Kopie aktualisiert. Im Zuge der Aktualisierung wird jede der Blockchain-Strukturen der Kopien bzw. Kopiervorlagen der Abstammungshistorie der zusätzlich erstellten Kopie um einen zusätzlichen Block ergänzt, welche dem Kopiervorgang zum Erstellen der zusätzlichen Kopie zugeordnet ist. Aufgrund dieser Aktualisierungen weisen alle Kopien bzw. Kopiervorlagen der Abstammungshistorie die vollständige Blockchain-Struktur der zuletzt erzeugten Kopie auf. Mit anderen Worten die Blockchain-Strukturen umfassen alle die vollständige Abstammungshistorie der zuletzt erzeugten Kopie.

Beispielsweise weisen alle digital codierten Dokumente 100, 110 einer gemeinsamen Abstammungshistorie die identische Blockchain-Struktur 111 auf, welche eine Mehrzahl von Blöcken 116, 126, 127 umfasst. Beispielsweise umfasst die Abstammungshistorie N-1 Kopiervorgänge, bei denen N-1 voneinander abhängige Kopien 110 des Ursprungsdokuments 100 erstellt wurden. Mithin umfasst die Blockchain-Struktur 111 beispielsweise N-1 Blöcke. Wird eine zusätzliche Kopie 120 erstellt, umfasst diese die Blockchain-Struktur 111, die um einen zusätzlichen Block 128 erweitert wird. Dieser zusätzliche Block 128 ist dem Kopiervorgang zum Erzeugen der zusätzlichen Kopie 120 zugeordnet. Der zusätzliche Block 128 umfasst einen Identifikator der verwendeten Kopiervorlage sowie einen Prüfmerkmal, welches eine Prüfung der kopierten Daten 102 inklusive der kopierten Blockchain-Struktur 111 ermöglicht. Im Zuge der Aktualisierung der Kopien bzw. Kopiervorlagen der Abstammungshistorie der hinzugefügten Kopie 120 werden alle Blockchain-Strukturen 111 der Kopien bzw. Kopiervorlagen 100, 110 der Abstammungshistorie um den zusätzlichen Block 128 ergänzt. Somit weist jede Kopie der Abstammungshistorie jeweils eine Blockchain-Struktur 111 auf, aus welcher alle Kopiervorgänge hervorgehen, welche zur Erstellung der entsprechenden Kopie geführt haben, ebenso wie alle Kopiervorgänge, welche ausgehend von der entsprechenden Kopie ausgeführt wurden.

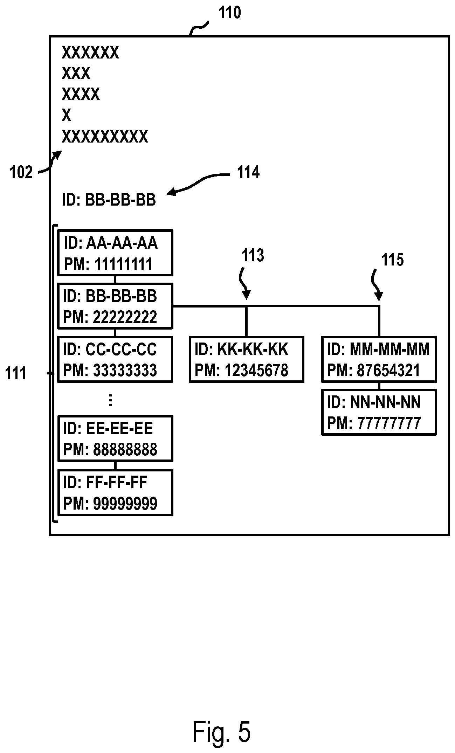

Wird eine Kopie der Abstammungshistorie als direkte Kopiervorlage für eine Mehrzahl von Kopien verwendet, so kommt es zu einer Verzweigung der Blockchain-Struktur. Die entsprechende Kopie, welche als Kopiervorlage für die Mehrzahl von weiteren Kopien verwendet wurde, sowie alle Kopiervorlagen ihrer Abstammungshistorie weisen in diesem Fall jeweils die vollständige Blockchain-Struktur mit allen Verzweigung auf. Ein Beispiel für ein digital codiertes Dokument mit einer entsprechenden verzweigten Blockchain-Struktur ist in Figur 5 gezeigt.

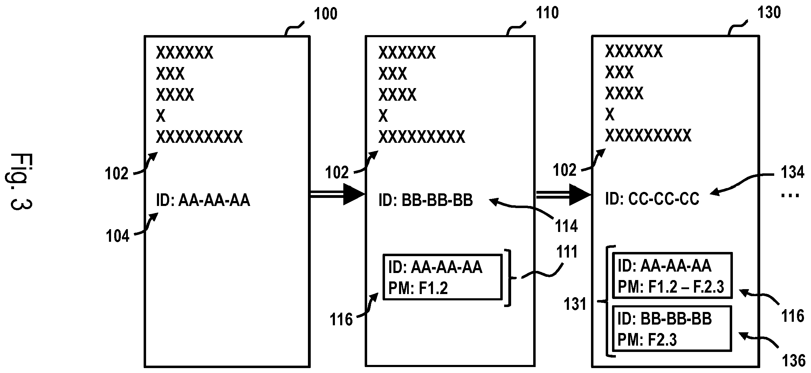

Figur 3 zeigt den Anfang einer exemplarischen Abstammungshistorie, welche ein Ursprungsdokument 100 sowie Kopien 110,130 des Ursprungsdokuments 100 bzw. der Daten 102 umfasst. Die digital codierten Dokumente 100, 110, 130 entsprechen weitgehend den Dokumenten 100, 110, 120 aus Figur 1. Jedoch unterscheiden sich der Aufbau der Blockchain-Strukturen voneinander. Bei den Prüfmerkmalen PM handelt es sich im Fall der Figur 3 jeweils um kopiervorgangsindividuelle bidirektionale Verkettungsfunktionen. Bei der Erstellung der Kopie 110 wird die Blockchain-Struktur 111 mit dem Block 116 erstellt. Der Block 116 der Kopie 110 umfasst einen eindeutigen Identifikator der Kopiervorlage, d.h. des Ursprungsdokuments 100, sowie eine kopiervorgangsindividuelle bidirektionale Verkettungsfunktion F1.2. Die kopiervorgangsindividuelle bidirektionale Verkettungsfunktion F1.2 wurde unter Verwendung der kopierten Daten 102 der Kopie 110 sowie der Daten 102 des Ursprungsdokuments 100 erstellt. Nach Ausführungsformen finden beim Erstellen der kopiervorgangsindividuelle bidirektionale Verkettungsfunktion F1.2 ferner die Identifikatoren 104, 114 von Ursprungsdokument 100 sowie der Kopie 110 Berücksichtigung. Die kopiervorgangsindividuelle bidirektionale Verkettungsfunktion F1.2 wird dem Block 116 als Prüfmerkmal hinzugefügt, welches die Kopie 110 mit dem Ursprungsdokument 100 bidirektional verkettet. Die bidirektionale Verkettung bedeutet, dass bereits eine nachträgliche Veränderung des Ursprungsdokument 100 ebenso wie eine Veränderung der Kopie 110 ausreicht, dass das Prüfmerkmal des Blocks 116 in Form der kopiervorgangsindividuelle bidirektionale Verkettungsfunktion F1.2 nicht mehr erfüllt wird. Mit anderen Worten: Wird für die kopiervorgangsindividuelle bidirektionale Verkettungsfunktion F1.2 eine Referenzfunktion unter Verwendung des oder der veränderten Dokumente 100, 110 erstellt, so stimmt diese nicht mit der abgespeicherten Verkettungsfunktion F1.2 überein. Anhand der Abweichung wird ersichtlich, dass eine nachträgliche Veränderung vorgenommen wurde.

Bei der Erstellung der Kopie 130 unter Verwendung des Dokuments 110 als Kopiervorlage wird auch die Blockchain-Struktur 111 kopiert. Die kopierte Blockchain-Struktur 111 wird zur Blockchain-Struktur 131 erweitert. Hierzu wird der Block 136 hinzugefügt und mit dem letzten Block 116 der kopierten Blockchain-Struktur 111 bidirektional verkettet. Der Block 136 umfasst einen eindeutigen Identifikator der Kopiervorlage, d.h. des Dokuments 110. Die bidirektionale Verkettung umfasst das Hinzufügen der kopiervorgangsindividuelle bidirektionale Verkettungsfunktion F2.3 sowohl zu Block 136 als auch zu Block 116. Im Ergebnis umfasst der Block 116 der Blockchain-Strukturen 131 somit zwei kopiervorgangsindividuelle bidirektionale Verkettungsfunktionen F1.2, F2.3, welche einerseits die Kopie 110 mit dem Ursprungsdokument 100 und andererseits die Kopie 130 mit der Kopiervorlage 110 bidirektional verkette. Insbesondere verkettet die kopiervorgangsindividuelle bidirektionale Verkettungsfunktionen F2.3 die beiden unmittelbar aufeinanderfolgenden Blöcke 116 und 136 miteinander.

Der zuletzt hinzugefügte Block 136, welcher zu der Blockchain-Struktur 131 der zuletzt erstellten Kopie 130 hinzugefügt wurde, umfasst allerdings lediglich die kopiervorgangsindividuelle bidirektionale Verkettungsfunktion F2.3. Der Grund hierfür ist, dass der Block 136 mangels nachfolgendem Block nur eine Verkettung mit dem vorangehenden Block 116 aufweist. Wird die Kopie 130 als Kopiervorlage für das Erstellen einer weiteren Kopie verwendet und wird diese weitere Kopie mit der Kopiervorlage 130 über eine kopiervorgangsindividuelle bidirektionale Verkettungsfunktion verkettet, so wird das Prüfmerkmal des Blocks 136 um die entsprechende kopiervorgangsindividuelle bidirektionale Verkettungsfunktion erweitert.

Nach Ausführungsformen können die einzelnen Blöcke der Blockchain-Strukturen 111, 131 beispielsweise nicht nur den Identifikator der für den jeweiligen Kopiervorgang verwendeten Kopiervorlage, sondern auch den Identifikator der Kopie umfassen, welche in dem jeweiligen Kopiervorgang erstellt wurde. Im Falle des ersten Kopiervorgangs, d.h. Block 116, wäre dies das Dokument 110. Im Falle des zweiten Kopiervorgangs, d.h. Block 136, wäre dies das Dokument 130.

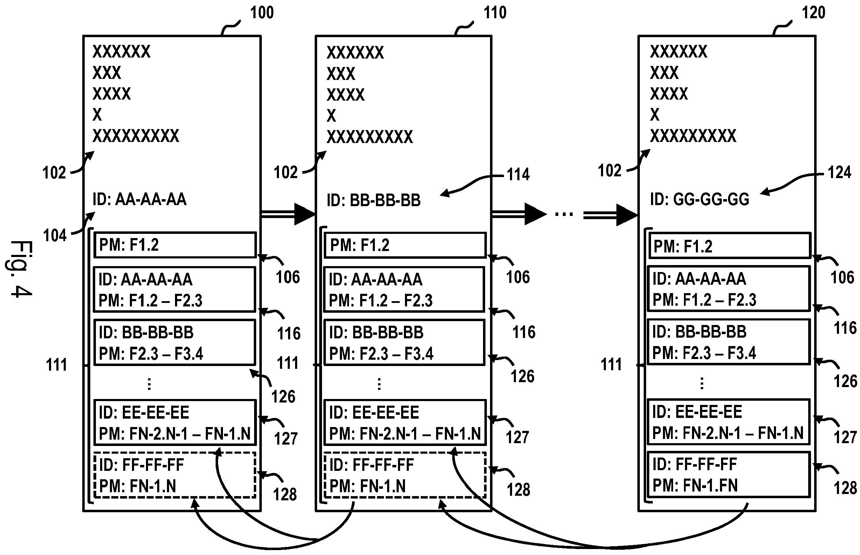

Figur 4 zeigt eine weitere exemplarische Abstammungshistorie mit einem Ursprungsdokuments 100 und einer Mehrzahl von Kopien 110, 120 mit Daten 102 des Ursprungsdokuments 100. Die gezeigten digital codierten Dokumente 100, 110, 120 entsprechen den digital codierten Dokumenten aus Figur 2. Die Blockchain-Strukturen 111 der Dokumente 100, 110, 120 der Abstammungshistorie werden bei jedem Kopiervorgang aktualisiert. Der Unterschied gegenüber Figur 2 besteht darin, dass es sich bei den Prüfmerkmalen PM jeweils um kopiervorgangsindividuelle bidirektionale Verkettungsfunktionen handelt. Ferner umfassen die Blockchain-Strukturen 111 jeweils einen Block 106 als Genesisblock, welcher als Prüfmerkmal die kopiervorgangsindividuelle bidirektionale Verkettungsfunktion F1.2 umfasst, welche das Ursprungsdokument 100 mit der ersten Kopie 110 bzw. den Block 106 mit dem Block 116 der Blockchain-Struktur 111 verkettet.

Wird beispielsweise in einem N-ten Kopiervorgang die N-te Kopie 120 erstellt, so umfasst diese eine Kopie der Blockchain-Struktur 111 der vorangehenden Kopiervorlage. Diese Blockchain-Struktur 111 wird um einen zusätzlichen Block 128 für den N-te Kopiervorgang zur Erstellung der Kopie 120 erweitert. Da die Blockchain-Struktur 111 einen Genesisblock 106 umfasst, handelt es sich bei dem Block 128 um den N+1 Block der erweiterten Blockchain-Struktur 111 des Dokuments 120. Der zusätzliche Block 128 umfasst einen Identifikator der verwendeten Kopiervorlage sowie einen Prüfmerkmal in Form der kopiervorgangsindividuellen bidirektionalen Verkettungsfunktion FN-1.FN, welches eine Prüfung der kopierten Daten 102 inklusive der kopierten Blockchain-Struktur 111 des Dokuments 120 ebenso wie der Daten und Blockchain-Struktur der verwendeten Kopiervorlage ermöglicht. Nach Ausführungsformen hängt die kopiervorgangsindividuellen bidirektionalen Verkettungsfunktion FN-1.FN zudem von den Identifikatoren der Kopiervorlage sowie der daraus erstellten Kopie 120 ab.

Im Zuge der Aktualisierung der Kopien bzw. Kopiervorlagen 110, 110 der Abstammungshistorie der hinzugefügten Kopie 120 werden alle Blockchain-Strukturen 111 um den zusätzlichen Block 128 ergänzt. Ferner wird bei allen Blockchain-Strukturen 111 jeweils die bidirektionale Verkettung zwischen dem zusätzlichen Block 128 und dem unmittelbar vorangehenden Block 127 ergänzt. Hierzu wird das Prüfmerkmal des Blocks 127 jeweils um die kopiervorgangsindividuellen bidirektionalen Verkettungsfunktion FN-1.FN erweitert. Beispielsweise wird eine Verknüpfung zwischen der kopiervorgangsindividuellen bidirektionalen Verkettungsfunktion FN-2.FN-1 und der kopiervorgangsindividuellen bidirektionalen Verkettungsfunktion FN-1.FN erstellt. Hierbei handelt es sich beispielsweise um eine arithmetische Verknüpfung, wie etwa Addition, Subtraktion, Multiplikation und/oder Division. Somit weist jede Kopie der Abstammungshistorie jeweils ein Blockchain-Struktur 111 auf, aus welcher alle Kopiervorgänge hervorgehen, welche zur Erstellung der entsprechenden Kopie geführt haben, ebenso wie alle Kopiervorgänge, welche ausgehend von der entsprechenden Kopie ausgeführt wurden.

Der Genesisblock 106 wird beispielsweise erstellt, um das Ursprungsdokument 100 der Abstammungshistorie zu kennzeichnen. Anhand des Genesisblock 106 ist ersichtlich, dass die Abstammungshistorie tatsächlich mit dem Ursprungsdokument 100 beginnt und nicht nur einen abgeschnittenen Rest einer eigentlich viel längeren Abstammungshistorie darstellt. Nach weiteren Ausführungsformen kann der Genesisblock 106 auch entfallen. Ferner kann beispielsweise der Block 116 als erster Block der Blockchain-Struktur 110 gekennzeichnet werden. Einen entsprechenden Genesisblock, welcher das Ursprungsdokument 100 der Abstammungshistorie kennzeichnet, können nach weiteren Ausführungsformen auch die Blockchain-Strukturen der exemplarischen Dokumente der Figuren 1 bis 3 aufweisen und/oder die Ursprungsdokumente können um eine Blockchain-Struktur mit einem solchen Genesisblock erweitert werden.

Figur 5 zeigt ein schematisches Blockdiagramm einer Ausführungsform des zweiten digital codierten Dokuments 110 aus Figur 2. Im vorliegenden Fall dient das digital codierte Dokument 110 mit Identifikator BB-BB-BB nicht nur als Kopiervorlage für eine dritte Kopie mit Identifikator CC-CC-CC der Abstammungshistorie aus Figur 2, sondern zudem auch als Kopiervorlage für weitere Kopien mit Identifikator KK-KK-KK und Identifikator MM-MM-MM. Die Blockchain-Struktur 111 weist in diesem Fall Verzweigungen 113, 115 zu den weiteren Kopien bzw. Blockchain-Strängen auf. Die Blockchain-Struktur 121 der Kopie 120 bleibt demgegenüber beispielsweise unverändert, falls sich die Aktualisierungen allein auf Blockchain-Strukturen vorhergehender Blöcke der direkten linearen Verbindung zwischen Ursprungsdokument und der jeweils neu erstellten Kopie beschränken. Werden im Zuge einer Aktualisierung die Blockchain-Strukturen aller Dokumente aller Verzweigungen der Abstammungshistorie erweitert, so umfassen alle Dokumente die identische Blockchain-Struktur, welche die vollständige Abstammungshistorie mit allen Verzweigungen 113, 115 wiedergibt.

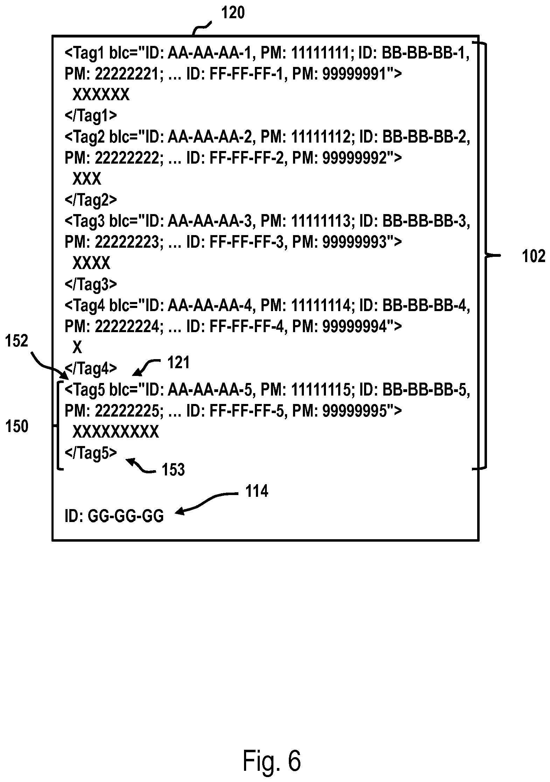

Figur 6 zeigt ein schematisches Blockdiagramm einer Ausführungsform eines exemplarischen digital codierten Dokuments 120 mit einem eindeutigen Identifikator 114, wobei die kopierten Daten 102 in einer Auszeichnungssprache editiert sind. Einzelne Datenelemente 150 der kopierten Daten 102 sind jeweils durch Metadaten in Form eines Tag-Paares aus einem Starttag 152 und einem Endtag 153 gekennzeichnet. In der gezeigten Ausführungsform wird für jedes der Datenelemente 150 der kopierten Daten des Ursprungsdokuments eine eigenständige Blockchain-Struktur 121 als ein Attribut bereitgestellt. Im vorliegenden Fall werden die datenelementspezifischen Blockchain-Strukturen 121 jeweils als ein Attribut dem Starttag 152 des entsprechenden Datenelements 150 hinzugefügt. Nach alternativen Ausführungsformen können die datenelementspezifischen Blockchain-Strukturen 121 auch den Endtags 153 als Attribute hinzugefügt sein. Die einzelnen Blöcke der Blockchain-Strukturen bestehen in der gezeigten Ausführungsform jeweils aus dem Identifikator ID einer Kopiervorlage sowie einem Prüfmerkmals PM der kopierten Daten für jeden Kopiervorgang einer Abstammungshistorie des entsprechenden Datenelementes. Die Blöcke sind jeweils beispielshaft durch einen ";" voneinander getrennt. Verschiedene Datenelemente können beispielsweise auch kopierte Daten umfassen, welche aus verschiedenen Ursprungsdokumenten stammen und somit unterschiedliche Abstammungshistorien aufweisen.

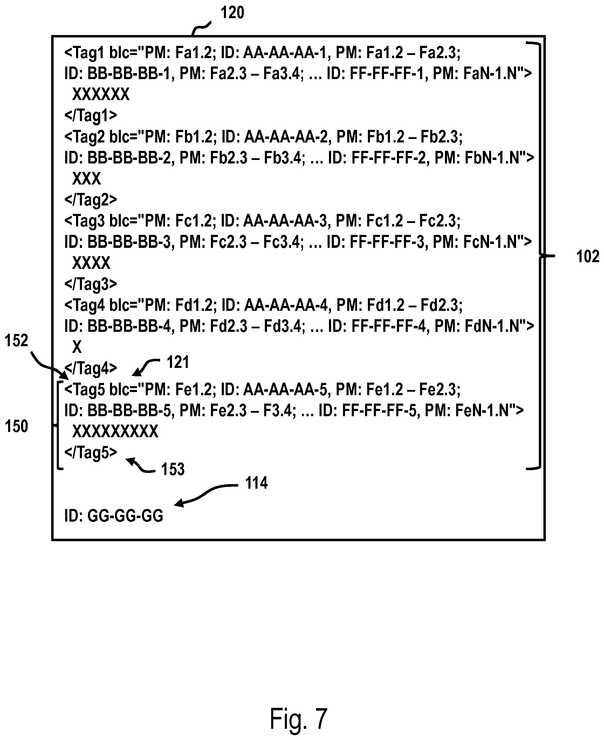

Figur 7 zeigt ein schematisches Blockdiagramm einer weiteren Ausführungsform eines exemplarischen digital codierten Dokuments 120. Das gezeigte digital codierte Dokument 120 entspricht dem digital codierten Dokument 120 aus Figur 6, wobei die Prüfmerkmale, wie im Fall der Figuren 3 und 4, kopiervorgangsindividuelle bidirektionale Verkettungsfunktionen umfassen. In dem gezeigten Beispiel werden für die Blockchain-Strukturen der einzelnen Datenelemente jeweils andere kopiervorgangsunabhängige bidirektionale Verkettungsfunktionen Fa, Fb, Fc, Fd, Fe zum Ableiten der kopiervorgangsindividuellen bidirektionalen Verkettungsfunktion verwendet. Nach alternativen Ausführungsformen können für einzelne oder alle Blockchain-Strukturen jeweils identische kopiervorgangsunabhängige Verkettungsfunktionen zum Ableiten der entsprechenden kopiervorgangsindividuellen Verkettungsfunktionen verwendet werden. In dem gezeigten Beispiel umfassen die Blockchain-Strukturen jeweils einen Genesisblock, welcher nur das Prüfmerkmal des Ursprungsdokuments umfasst. Nach alternativen Ausführungsformen können die Genesisblöcke in den Blockchain-Strukturen auch weggelassen werden.

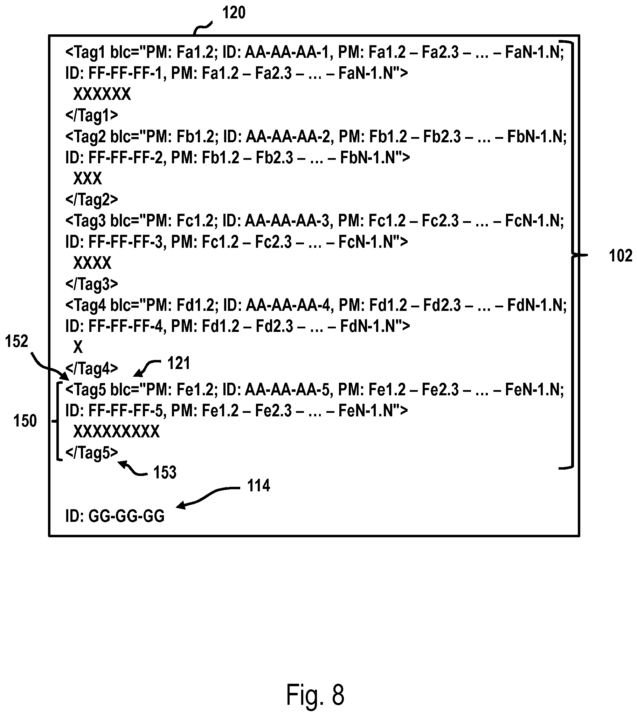

Figur 8 zeigt ein schematisches Blockdiagramm einer alternativen Ausführungsform des digital codierten Dokuments 120 aus Figur 7. Im Fall des digital codierten Dokuments 120 aus Figur 8 wurden die Blockchain-Strukturen der einzelnen Datenelemente 150 jeweils verkürzt. Hierzu wurden beispielsweise jeweils alle Blöcke entnommen, bis auf die ersten beiden und den letzten Block. Die bidirektionalen Verkettungsfunktionen der entnommenen Blöcke wurden miteinander verknüpft und zur Ersetzung der Prüfmerkmale des verbleibenden zweiten und letzten Blocks der Blockchain-Strukturen verwendet. An der verknüpften bidirektionalen Verkettungsfunktion kann bestimmt werden, ob entnommene Blöcke der Blockchain-Strukturen, welche beispielsweise zu Prüfzwecken bereitgestellt werden, authentisch sind oder nicht. Im Fall der Blockchain-Struktur 121 des Datenelements 150 umfasst die verknüpfte bidirektionale Verkettungsfunktion Fe1.2 - Fe2.3 - ... - FeN-1.N beispielsweise die kopiervorgangsindividuellen bidirektionalen Verkettungsfunktionen Fe1.2, Fe2.3, ..., FeN-1.N aller N Kopiervorgänge der Abstammungshistorie der Daten des Datenelements 150. Die ersten Böcke der Blockchain-Strukturen, welche im vorliegenden Fall als Genesisblöcke jeweils nur das Prüfmerkmal der aus dem oder den Ursprungsdokumenten kopierten Daten umfassen, können nach Ausführungsformen auch weggelassen werden.

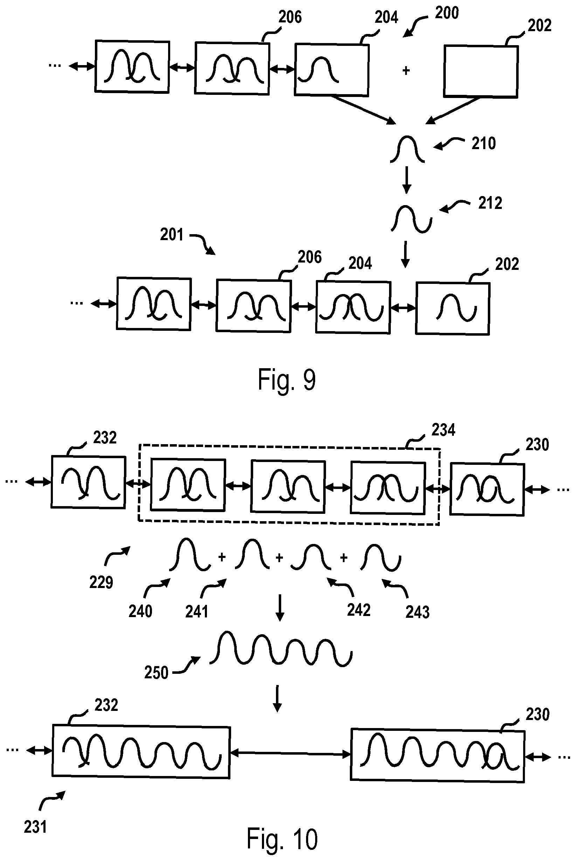

Figur 9 zeigt eine Ausführungsform einer exemplarischen Blockchain-Struktur 200. Die Blockchain-Struktur 200 soll um einen zusätzlichen Block 202 erweitert werden. Die Blöcke der Blockchain-Struktur 200 sind durch kopiervorgangsindividuelle bidirektionale Verkettungsfunktionen, schematisch angedeutet durch Funktionskurven, miteinander verkettet. Die inneren Blöcke der Blockchain-Struktur 200, wie etwa der vorletzte Block 206, sind so jeweils durch eine erste kopiervorgangsindividuelle bidirektionale Verkettungsfunktion von dem unmittelbar vorangehenden Block und durch eine zweite kopiervorgangsindividuelle bidirektionale Verkettungsfunktion von dem unmittelbar nachfolgenden Block abhängig. Die entsprechenden kopiervorgangsindividuellen bidirektionalen Verkettungsfunktionen sind als Prüfmerkmal in die Blöcke integriert. Die jeweiligen kopiervorgangsindividuellen bidirektionalen Verkettungsfunktionen wurden unter Verwendung von Daten sowohl der jeweiligen Kopiervorlage als auch der resultierenden Kopie erzeugt.

Zur bidirektionalen Verkettung des letzten Blocks 204 der Blockchain-Struktur 200 mit dem zusätzlichen Block 202 wird beispielsweise eine kopiervorgangsunabhängige Verkettungsfunktion 210 bereitgestellt. Aus der kopiervorgangsunabhängigen Verkettungsfunktion 210 wird eine kopiervorgangsindividuelle bidirektionale Verkettungsfunktion 214 abgeleitet. Für die Ableitung der kopiervorgangsindividuellen bidirektionalen Verkettungsfunktion 212 werden ein Dateninhalt der Kopiervorlage sowie ein Dateninhalt der beim entsprechenden Kopiervorgang erstellten Kopie als Parameter in die kopiervorgangsindividuelle bidirektionale Verkettungsfunktion 210 eingesetzt. Die so erzeugte kopiervorgangsindividuelle bidirektionale Verkettungsfunktion 212 ist paarweise sowohl von der Kopiervorlage als auch von der in dem Kopiervorgang erstellten Kopie abhängig.

Die kopiervorgangsindividuelle bidirektionale Verkettungsfunktion 212 wird zur Aktualisierung des Prüfmerkmals des Blocks 204 sowie zum Erstellen des Prüfmerkmals des Blocks 202 verwendet. Beispielsweise wird die kopiervorgangsindividuelle bidirektionale Verkettungsfunktion 212 sowohl in den Block 204 als auch in dem Block 202 eingefügt. Nach weiteren Ausführungsformen kann die Funktion 212 ferner dazu verwendet werden, den Dateninhalt der Kopiervorlage und/oder den Dateninhalt der erstellten Kopie zu transformieren, sodass ein Chiffrat entsteht.

Figur 10 zeigt eine exemplarische bidirektional verkettete Blockchain-Struktur 229, welche verkürzt werden soll, sodass eine verkürzte Form 231 entsteht. Hierzu wird ein inneres Kettensegment 234 zwischen den Blöcken 232 und 230 entnommen. Das innere Kettensegment 234 umfasst beispielsweise eine Mehrzahl von aufeinanderfolgenden Blöcken der Blockchain-Struktur 229. Die Prüfmerkmale der Blöcke des inneren Kettensegments 234, d. h. deren kopiervorgangsindividuelle bidirektionale Verkettungsfunktionen 240, 241, 242, 243, werden miteinander verknüpft, sodass eine kombinierte bidirektionale Verkettungsfunktion 250 entsteht. Diese kombinierte bidirektionale Verkettungsfunktion 250 ist von den einzelnen kopiervorgangsindividuellen bidirektionalen Verkettungsfunktionen 240, 241, 242, 243 abhängig. Beispielsweise werden die einzelnen kopiervorgangsindividuellen bidirektionalen Verkettungsfunktionen 240, 241, 242, 243 durch eine arithmetische Verknüpfung miteinander verknüpft, welche beispielsweise eine Addition, Subtraktion, Multiplikation und/oder Division umfasst.

Die beiden Blöcke 232 und 230 der Blockchain-Struktur 229, welche nach der Entnahme des inneren Kettensegments 234 lose Enden der Blockchain-Struktur 229 bilden, werden unter Verwendung der kombinierten bidirektionalen Verkettungsfunktion 250 miteinander verkettet. Hierzu werden beispielsweise die kopiervorgangsindividuellen bidirektionalen Verkettungsfunktionen, welche die Blöcke 230, 232 jeweils mit einem Block des entnommenen inneren Kettensegments 234 verbinden, durch die kombinierte bidirektionale Verkettungsfunktion 250 ersetzt bzw. zu dieser erweitert. Damit entsteht eine verkürzte bidirektional verkettete Blockchain-Struktur 231. Die entstehende Blockchain-Struktur 231 ist jedoch nach wie vor abhängig von dem entnommenen inneren Kettensegment 234. Wird das entnommene innere Kettensegment 234 zur Ergänzung der verkürzten Blockchain-Struktur 231 bereitgestellt, so kann unter Verwendung der kombinierten bidirektionalen Verkettungsfunktion 250 geprüft werden, ob das bereitgestellte innere Kettensegment authentisch ist. Ist das bereitgestellte innere Kettensegment authentisch, d. h. identisch mit dem entnommenen inneren Kettensegment 234, so kann die verkürzte Blockchain-Struktur, beispielsweise für Prüfzwecke, zu der ursprünglichen vollständigen Blockchain-Struktur 229 ergänzt werden.

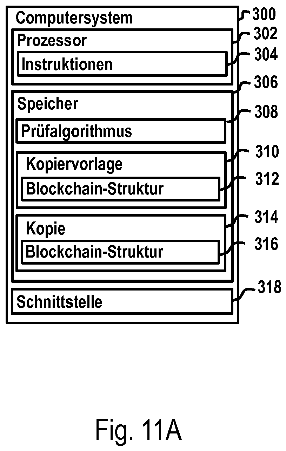

Figur 11A zeigt eine Ausführungsform eines exemplarischen Computersystems 300 zum Ausführen eines Verfahrens zur Integritätssicherung einer digital codierten Kopie eines digital codierten Ursprungsdokuments unter Verwendung einer in die Kopie integrierten Blockchain-Struktur zur Protokollierung der Abstammungshistorie der Kopie. Das Computersystem 300 umfasst einen Prozessor 302, welcher dazu konfiguriert ist, Programminstruktionen 304 auszuführen. Durch Ausführung der Programminstruktionen 304 steuert der Prozessor 302 das Computersystem 300 so, dass es eine der zuvor beschriebenen Ausführungsformen des Verfahrens zur Integritätssicherung einer digital codierten Kopie ausführt.

Das Computersystem 300 umfasst ferner einen Speicher 306, in welchem eine Kopiervorlage 310 mit einer Blockchain-Struktur 312 gespeichert ist, die die Abstammungshistorie der Kopiervorlage 310 protokolliert. Durch Ausführen der Programminstruktionen 304 wird eine Kopie 314 der Kopiervorlage 310 erstellt, welche die Blockchain-Struktur 316 umfasst. Bei der Blockchain-Struktur 316 handelt es sich um eine Kopie der Blockchain-Struktur 312, welche um einen zusätzlichen Block erweitert wurde. Zur Erstellung des zusätzlichen Blocks wird ein Prüfmerkmal der kopierten Daten inklusive der Blockchain-Struktur 312 berechnet und in den zusätzlichen Block der Blockchain-Struktur 316 aufgenommen. Das entsprechende Prüfmerkmal wird beispielsweise unter Verwendung eines in dem Speicher 306 gespeicherten Prüfalgorithmus 308, bei dem es sich beispielsweise um einen Hash-Algorithmus handelt, berechnet.

Schließlich umfasst das Computersystem 300 eine Kommunikationsschnittstelle 318. Bei dieser Kommunikationsschnittstelle 318 kann es sich beispielsweise um eine Netzwerkschnittstelle zur Kommunikation über ein Netzwerk oder um eine Schnittelle zur Kommunikation mit einem Wechseldatenträger handeln. Über die Kommunikationsschnittstelle 318 kann beispielsweise die Kopiervorlage 310 zum Erzeugen der Kopie 314 bereitgestellt werden. Ferner kann es sich bei der Kommunikationsschnittstelle 318 um eine Nutzerschnittstelle zur Eingabe von Befehlen durch einen Nutzer und/oder zur Ausgabe von Ergebnissen handeln.

Beispielsweise wird mit dem Computersystem 300 auf die Kopiervorlage 310 zugegriffen. Bei der Kopiervorlage 310 handelt es sich beispielsweise um eine Nachrichtenmeldung, welche auf einer Internetplattform, wie etwa als Webseite auf einer Website oder als Eintrag auf einer Social-Media-Plattform, in einem Diskussionsforum und/oder in einem Blog, zum Aufrufen bereitgestellt wird. Computersystem 300 ist beispielsweise über die Kommunikationsschnittstelle 318 mit dem Internet verbunden und kann die Kopiervorlage 310 so aufrufen. Beim Aufrufen der Kopiervorlage 310 wird beispielsweise im Hintergrund unter Verwendung des Prüfalgorithmus 308 die Integrität der Kopiervorlage 310 geprüft. Hierzu wird über das Internet beispielswiese zumindest auf das Ursprungsdokument der Abstammungshistorie der Kopiervorlage 310 zugegriffen. Nach Ausführungsformen wird auf alle von der Abstammungshistorie gemäß Blockchain-Struktur 312 umfassten Kopiervorlagen zugegriffen. Anhand eines Vergleich der Blockchain-Struktur 312 mit den Kopiervorlagen der Abstammungshistorie, auf welche zugegriffen wird, kann die Integrität der Kopiervorlage 310 geprüft werden. Fällt die Integritätsprüfung positiv aus, kann beispielsweise die Kopie 314 der Nachrichtenmeldung unter Verwendung der Kopiervorlage 310 erstellt werden. Die Kopie 314 kann sodann über das Internet beispielsweise als Nachricht verschickt oder auf einer Internet-Plattform zum weiteren Abruf bzw. zur Weiterverbreitung bereitgestellt werden. Das Bereitstellen kann beispielsweise durch das Computersystem 300 erfolgen, wenn dieses als Server konfiguriert ist, oder über die Kommunikationsschnittstelle 318 an einen Server zum Bereitstellen im Internet übertragen werden.

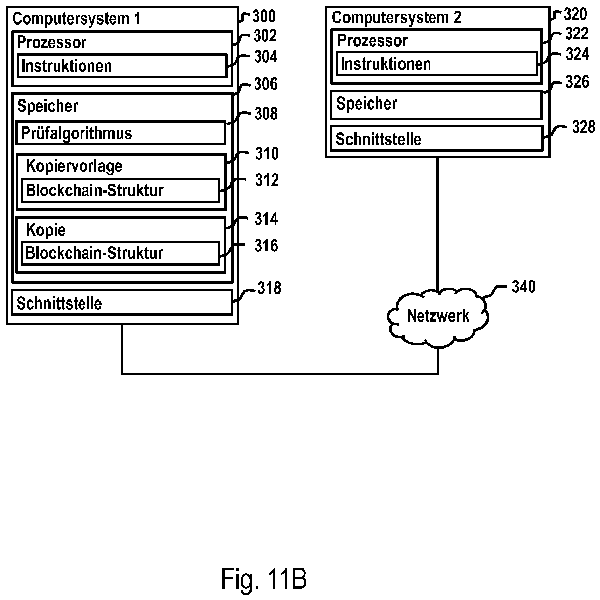

Figur 11B zeigt das exemplarische Computersystems 300 aus Figur 11A. Als elektronisches Datenspeichersystem ist das Computersystems 300 beispielsweise dazu konfiguriert die erstellte digital codierte Kopie 314 in dem Speicher 306 zu speichern. Nach Ausführungsformen können die Programminstruktionen 304 beispielsweise ein Datenbankmanagementsystem umfassen, welches die in dem Speicher 306 gespeicherten digital codierten Daten in Form von digital codierten Dokumenten, wie etwa der Kopie 314, verwaltet. Ferner kann das Computersystems 300 als ein Telekommunikationssystem konfiguriert sein, welches mittels der Kommunikationsschnittstelle 318 über das Netzwerk 340 mit anderen Computersystemen, wie etwa dem Computersystem 320, kommunizieren kann. Das Computersystem 320 umfasst beispielsweise einen Speicher 326 zum Speichern von digital codierten Dokumenten, wie etwa die von dem Computersystem 300 erstellte digital codierte Kopie 314. Ferner umfasst das Computersystem 320 einen Prozessor 322, welcher dazu konfiguriert ist, Programminstruktionen 324 auszuführen. Nach Ausführungsformen ist das Computersystems 320 ebenfalls als ein Telekommunikationssystem konfiguriert, welches mittels der Kommunikationsschnittstelle 328 über das Netzwerk 340 mit dem Computersystemen 300 kommunizieren kann.

Nach Ausführungsformen steuert der Prozessor 322 das Computersystem 320 durch Ausführung der Programminstruktionen 324 so, dass es die erstellte digital codierte Kopie 314 von dem Computersystem 300 anfordert. Beispielsweise sendet das Computersystem 320 über das Netzwerk 340 eine entsprechende Anforderung, wie etwa eine HTTP-GET-Anforderung, an das Computersystem 300. Nach Ausführungsformen steuert der Prozessor 302 das Computersystem 300 durch Ausführung der Programminstruktionen 304 so, dass das Computersystem 300 in Antwort auf den Empfang der Anforderung die digital codierte Kopie 314 über das Netzwerk 340 an das Computersystem 320 sendet. Beispielsweise wird die digital codierte Kopie 314 als Webseite oder Posting bereitgestellt. Ferner kann die digital codierte Kopie 314 mit einer entsprechenden Webseite oder Posting verlinkt sein. Nach weiteren Ausführungsformen wird die digital codierte Kopie 314 beispielsweise mittels einer E-Mail oder als Instant-Message von dem Computersystem 300 unaufgefordert über das Netzwerk 340 an das Computersystem 320 gesendet. Schließlich kann digital codierte Kopie 314 auch durch eine HTTP-Post-Anforderung von dem Computersystem 300 unaufgefordert über das Netzwerk 340 an das Computersystem 320 gesendet werden.

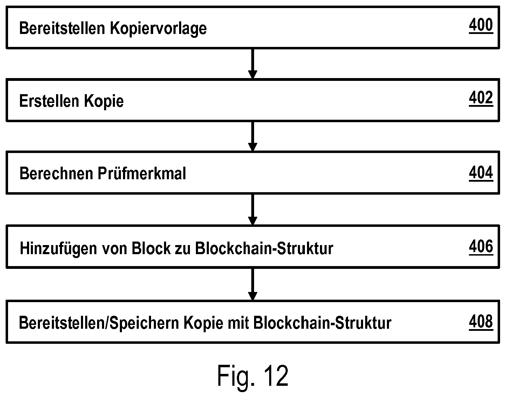

Figur 12 zeigt eine Ausführungsform eines exemplarischen Verfahrens zur Integritätssicherung beim Erstellen einer digital codierten Kopie eines digital codierten Ursprungsdokuments unter Verwendung einer in die Kopie integrierten Blockchain-Struktur zur Protokollierung der Abstammungshistorie der Kopie. In Schritt 400 wird eine Kopiervorlage für den Kopiervorgang bereitgestellt. Die Kopiervorlage umfasst Daten des digital codierten Ursprungsdokuments sowie eine Blockchain-Struktur, in der die Abstammungshistorie der Kopiervorlage protokolliert ist. Die Kopiervorlage kann beispielsweise auf dem den Kopiervorgang ausführenden Computersystem oder auf einem an dieses angeschlossenen Speichermedium oder einem Wechseldatenträger gespeichert sein. Ferner kann die Kopiervorlage beispielsweise über ein Netzwerk, wie etwa das Internet oder ein Intranet, zum Abrufen durch das Computersystem bereitgestellt sein. Schließlich kann das Computersystem die Kopiervorlage auch als Anhang zu einer digital codierten Nachricht, wie etwa eine E-Mail, empfangen. In Schritt 402 wird eine Kopie der Daten der Kopiervorlage erstellt. In Schritt 404 wird ein Prüfmerkmal der kopierten Daten, d. h. der Daten des digital codierten Ursprungsdokuments sowie der Blockchain-Struktur, welche die Kopiervorlage umfasst, erstellt. Ferner kann das Prüfmerkmal einen eindeutigen Identifikator der Kopiervorlage berücksichtigen. In Schritt 406 wird ein zusätzlicher Block zu der kopierten Blockchain-Struktur der Kopiervorlage hinzugefügt, wobei der zusätzliche Block einen eindeutigen Identifikator der Kopiervorlage und das in Schritt 404 berechneten Prüfmerkmal umfasst. Durch das Hinzufügen des zusätzlichen Blocks wird die Blockchain-Struktur der Kopie gebildet. In Schritt 408 wird die erstellte Kopie mit ihrer Blockchain-Struktur beispielsweise gespeichert oder über ein Netzwerk an ein die Kopie anfragendes Computersystem übersendet. Im letzteren Fall wird der Kopiervorgang beispielsweise durch eine entsprechende Anfrage nach der Ko-pie durch das weitere Computersystem ausgelöst. Schließlich kann die Kopie auch durch einen Server zum Abrufen über ein Netzwerk, wie etwa das Internet oder ein Intranet, bereitgestellt werden.

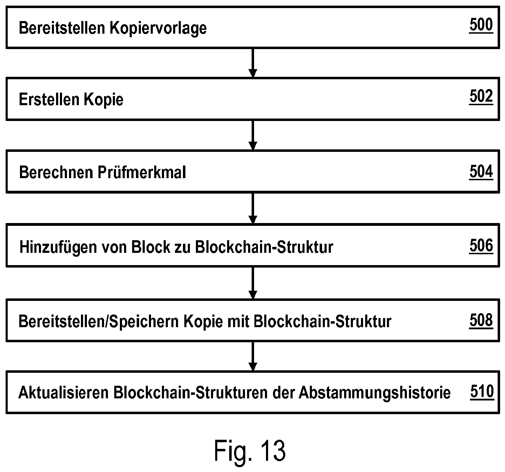

Figur 13 zeigt eine Ausführungsform eines weiteren exemplarischen Verfahrens zum Erstellen einer integritätsgesicherten digital codierten Kopie. Die Verfahrensschritte 500 bis 508 entsprechen dabei den Verfahrensschritten 400 bis 408 aus Figur 12. Das Verfahren gemäß Figur 13 weist zusätzlich den Schritt 510 auf, in welchem die Blockchain-Strukturen der Kopien der Abstammungshistorie der in Schritt 502 erstellten Kopie um den in Block 506 erstellten zusätzlichen Block aktualisiert, d. h. ergänzt werden. Hierzu werden beispielsweise die Kopien bzw. Kopiervorlagen der Abstammungshistorie anhand der Identifikatoren in den Blöcken der Blockchain-Struktur identifiziert. Daraufhin werden die entsprechenden Kopien bzw. Kopiervorlagen der Abstammungshistorie aktualisiert. Sind entsprechende Kopien bzw. Kopiervorlagen auf verschiedenen Computersystemen verteilt gespeichert, so werden beispielsweise die einzelnen Computersysteme anhand von Informationen der Identifikatoren, wie etwa Adressen, unter denen die Kopien gespeichert sind, über die notwendige Aktualisierung informiert. Auf den Empfang einer entsprechenden Information bzw. Aktualisierungsaufforderung hin werden die Kopien von den angefragten Computersystemen aktualisiert. Nach Ausführungsformen erfolgt beispielsweise zunächst eine Authentifizierung des kopierenden Computersystems gegenüber dem angefragten Computersystem, auf welchem die zu aktualisierende Kopiervorlage gespeichert ist. Das Authentifizieren des kopierenden Computersystems kann Teil einer gegenseitigen Authentifizierung sein. Eine Authentifizierung kann nach Ausführungsformen unter Verwendung von Zertifikaten, insbesondere Zertifikate eines PKI erfolgen. Handelt es sich bei der Blockchain-Struktur um eine bidirektional verkettete Blockchain-Struktur, so umfasst das Hinzufügen des zusätzlichen Blocks ein bidirektionales Verketten des entsprechenden Blocks mit dem letzten Block der zu aktualisierenden Blockchain-Struktur.

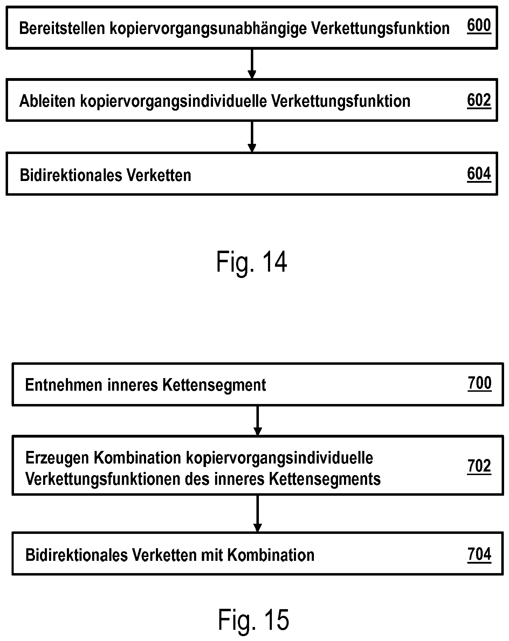

Figur 14 zeigt eine Ausführungsform eines exemplarischen Verfahrens zum Erzeugen einer bidirektionalen Verkettung. Dieses Verfahren ist beispielsweise Teil des Berechnens eines Prüfmerkmals und Erstellen eines zusätzlichen Blocks gemäß Schritten 404 und 406 bzw. 504 und 506 der Figuren 12 bzw. 13. In Schritt 600 wird eine kopiervorgangsunabhängige Verkettungsfunktion bereitgestellt. Die entsprechende kopiervorgangsunabhängige Verkettungsfunktion kann beispielsweise für eine Mehrzahl unterschiedlicher Blockchain-Strukturen bereitgestellt werden oder, im Falle einer Mehrzahl von unterschiedlichen Blockchain-Strukturen, kann für jede der Blockchain-Strukturen eine eigenständige kopiervorgangsunabhängige Verkettungsfunktion bereitgestellt werden. Aus der kopiervorgangsunabhängigen Verkettungsfunktion wird in Schritt 602 eine kopiervorgangsindividuelle bidirektionale Verkettungsfunktion abgeleitet, wobei Dateninhalte der Kopiervorlage als auch der erstellten Kopie als Parameter in die kopiervorgangsunabhängige Verkettungsfunktion eingesetzt werden. In Schritt 604 erfolgt schließlich ein bidirektionales Verketten der kopierten Blockchain-Struktur mit dem hinzuzufügenden zusätzlichen Block. Hierzu wird beispielsweise die kopiervorgangsindividuelle bidirektionale Verkettungsfunktion zu dem bisherigen Prüfmerkmal des letzten Blocks der kopierten Blockchain-Struktur hinzugefügt bzw. mit diesem verknüpft und zugleich als Prüfmerkmal in dem zusätzlich erstellten Block ergänzt. Bei der Verknüpfung kann es sich beispielswiese um eine arithmetische Verknüpfung handeln, welche eine Addition, Subtraktion, Multiplikation und/oder Division umfasst.

Figur 15 zeigt eine Ausführungsform eines exemplarischen Verfahrens zum Erzeugen einer verkürzten Kopie einer bidirektional verketteten Blockchain-Struktur. Bei der bidirektional verketteten Blockchain-Struktur kann es sich beispielsweise um eine Blockchain-Struktur handeln, die unter Verwendung des Verfahrens aus Figur 14 erstellt wurde. In Schritt 700 werden ein oder mehrere innere Kettensegmente aus der bidirektional verketteten Blockchain-Struktur entnommen. Die entnommenen inneren Kettensegmente umfassen dabei jeweils ein oder mehrere Blöcke der bidirektional verketteten Blockchain-Struktur. In Schritt 702 wird für jedes entnommene innere Kettensegment eine kombinierte kopiervorgangsindividuelle bidirektionale Verkettungsfunktion erzeugt. Hierzu werden die kopiervorgangsindividuellen bidirektionalen Verkettungsfunktionen der Blöcke des entsprechenden inneren Kettensegments miteinander verknüpft. Bei der Verknüpfung kann es sich beispielswiese um eine arithmetische Verknüpfung handeln, welche eine Addition, Subtraktion, Multiplikation und/oder Division umfasst. In Schritt 704 werden schließlich im Falle jedes entnommenen inneren Kettensegments die beiden losen Enden, welche sich durch das Entnehmen des entsprechenden inneren Kettensegments ergeben, unter Verwendung der kombinierten bidirektionalen Verkettungsfunktion aus Schritt 702 bidirektional miteinander verkettet. Hierzu werden die in den Blöcken, welche die beiden losen Enden bilden, gespeicherten kopiervorgangsindividuellen bidirektionalen Verkettungsfunktionen, mit welchen die entsprechenden Blöcke mit Blöcken des entnommenen inneren Kettensegments verkettet waren, durch die kombinierte bidirektionale Verkettungsfunktion ersetzt bzw. zu der kombinierten bidirektionalen Verkettungsfunktion ergänzt.

Nach Ausführungsformen können in Schritt 702 zwei kombinierte bidirektionale Verkettungsfunktionen erzeugt werden, wobei eine erste der beiden kombinierten bidirektionalen Verkettungsfunktionen zur Ergänzung des ersten losen Endes der verkürzten Blockchain-Struktur und die zweite kombinierte Verkettungsfunktion zum Ergänzen des zweiten losen Endes der verkürzten Blockchain-Struktur vorgesehen sind. Dabei umfasst die erste kombinierte Verkettungsfunktion alle kopiervorgangsindividuellen bidirektionalen Verkettungsfunktionen des inneren Kettensegments außer der kopiervorgangsindividuellen bidirektionalen Verkettungsfunktion des ersten losen Endes der verkürzten Blockchain-Struktur und die zweite kombinierte Verkettungsfunktion umfasst alle kopiervorgangsindividuellen bidirektionalen Verkettungsfunktionen des inneren Kettensegments außer der kopiervorgangsindividuellen bidirektionalen Verkettungsfunktion des zweiten losen Endes der verkürzten Blockchain-Struktur. Die Ergänzung des ersten bzw. zweiten losen Endes der Blockchain-Struktur kann in diesem Fall durch ein Verknüpfen der zu ergänzenden kopiervorgangsindividuellen bidirektionalen Verkettungsfunktionen des ersten bzw. zweiten losen Endes mit der ersten bzw. zweiten kombinierten bidirektionalen Verkettungsfunktion erfolgen.

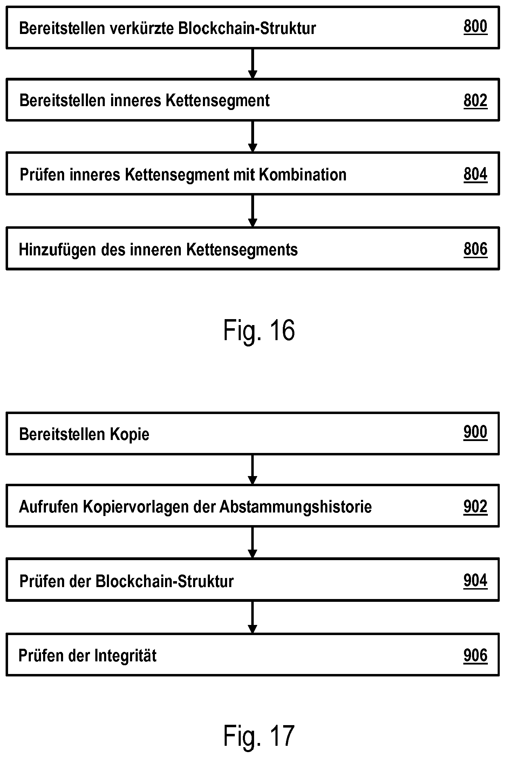

Figur 16 zeigt ein exemplarisches Verfahren zum Erstellen einer vollständigen bidirektional verketteten Blockchain-Struktur aus einer verkürzten bidirektionalen Blockchain-Struktur, beispielsweise für Prüfungszwecke. In Schritt 800 wird eine verkürzte bidirektional verkettete Blockchain-Struktur bereitgestellt. Hierbei handelt es sich beispielsweise um eine gemäß dem Verfahren der Figur 15 erstellten verkürzten bidirektional verketteten Blockchain-Struktur. In Schritt 802 wird ein zu ergänzendes inneres Kettensegment der ursprünglichen vollständigen bidirektional verketteten Blockchain-Struktur bereitgestellt. In Block 804 wird geprüft, ob das bereitgestellte innere Kettensegment mit dem aus der ursprünglichen vollständigen bidirektional verketteten Blockchain-Struktur entnommenen Segment übereinstimmt. Beispielsweise wird aus dem bereitgestellten inneren Kettensegment probeweise eine kombinierte bidirektionale Verkettungsfunktion berechnet und mit der kombinierten bidirektionalen Verkettungsfunktion der bereitgestellten verkürzten Blockchain-Struktur verglichen. Im Fall einer Übereinstimmung wird das bereitgestellte innere Kettensegment als authentisch anerkannt. Daraufhin wird in Schritt 806 das bereitgestellte innere Kettensegment an die ursprüngliche Stelle der bereitgestellten verkürzten Blockchain-Struktur eingefügt und die kombinierte bidirektionale Verkettungsfunktion der Blöcke, zwischen denen ein Kettensegment eingefügt wurde, durch die ursprünglichen bidirektionalen Verkettungsfunktionen ersetzt bzw. auf diese verkürzt.

Figur 17 zeigt schließlich ein exemplarisches Verfahren zum Prüfen der Integrität einer digital codierten Kopie eines digital codierten Ursprungsdokuments unter Verwendung einer in die Kopie integrierten Blockchain-Struktur, welche die Abstammungshistorie der Kopie protokolliert. In Schritt 900 wird eine entsprechende Kopie mit Blockchain-Struktur bereitgestellt. In Schritt 902 werden die Kopiervorlagen der Abstammungshistorie anhand der Blockchain-Struktur identifiziert und zu Prüfzwecken aufgerufen. In Schritt 904 wird die Blockchain-Struktur unter Verwendung der aufgerufenen Kopiervorlage auf ihre Integrität hin geprüft. Unter Verwendung der aufgerufenen Kopiervorlagen werden beispielsweise die einzelne Prüfmerkmale der einzelnen Blöcke der Blockchain-Struktur nachgerechnet. Stimmen die nachgerechneten Prüfmerkmale mit den Prüfmerkmalen der Blockchain-Struktur in der bereitgestellten Kopie überein, so ergibt sich daraus die Korrektheit der bereitgestellten Blockchain-Struktur. In Schritt 906 erfolgt schließlich eine Integritätsprüfung der kopierten Daten. Hierzu werden beispielsweise die Daten der Kopie mit den Daten des

Ursprungsdokuments verglichen. Stimmen diese miteinander überein, so handelt es sich um unveränderte Daten. Stimmen diese nicht überein, so kann anhand der Blockchain-Struktur nachgeprüft werden, an welcher Stelle der Abstammungshistorie bzw. bei welchem Kopiervorgang es zu einer Veränderung der kopierten Daten gekommen ist. Hierzu werden beispielsweise die einzelnen Prüfmerkmale unter Verwendung des Ursprungsdokuments nachgerechnet. Weicht ein Prüfmerkmal von dem Prüfmerkmal der Blockchain-Struktur ab, so indiziert dies eine Veränderung der Daten. Daraufhin kann geprüft werden, ob die Veränderung die Daten inhaltlich betrifft und/oder ob die bereitgestellte Kopie explizit auf die entsprechende Veränderung der Daten hinweist. Handelt es sich bei der Veränderung der Daten um keine inhaltliche Veränderung oder handelt es sich bei der Veränderung der Daten um eine Veränderung der Daten, auf welche explizit hingewiesen wird, so können die kopierten Daten in der bereitgestellten Kopie als integer eingestuft werden. Ein entsprechendes Prüfungsverfahren gemäß Figur 17 läuft beispielsweise im Hintergrund ab, wenn die entsprechende Kopie geöffnet bzw. aufgerufen werden. Das Ergebnis des Prüfvorgangs, d. h. eine Bestätigung der Integrität der Kopie, eine Verneinung der Integrität der Kopie und/oder eine Analyse von Änderungen der kopierten Daten, wird nach Abschluss der Prüfung beispielsweise zusätzlich zu dem geöffneten digital codierten Dokument angezeigt.

### Bezugszeichenliste

- 100: Ursprungsdokument
- 101: Blockchain-Struktur
- 102: Daten
- 104: Identifikator
- 110: Kopie
- 111: Blockchain-Struktur
- 114: Identifikator
- 116: Block
- 120: Kopie
- 121: Blockchain-Struktur
- 124: Identifikator
- 126: Block
- 127: Block
- 128: Block
- 130: Kopie
- 131: Blockchain-Struktur
- 134: Identifikator
- 136: Block
- 150: Element
- 152: Starttag
- 153: Endtag
- 200: Blockchain-Struktur
- 201: Blockchain-Struktur
- 202: Block
- 204: Block
- 206: Block
- 210: kopiervorgangsunabhängige Verkettungsfunktion
- 212: kopiervorgangsindividuelle Verkettungsfunktion
- 229: Blockchain-Struktur
- 230: Block
- 231: verkürzte Blockchain-Struktur
- 232: Block
- 234: inneres Kettensegment
- 240: kopiervorgangsindividuelle Verkettungsfunktion
- 241: kopiervorgangsindividuelle Verkettungsfunktion
- 242: kopiervorgangsindividuelle Verkettungsfunktion
- 243: kopiervorgangsindividuelle Verkettungsfunktion
- 250: Kombination Verkettungsfunktionen
- 300: Computersystem
- 302: Prozessor
- 304: Programminstruktionen
- 306: Speicher
- 308: Prüfalgorithmus
- 310: Kopiervorlage
- 312: Blockchain-Struktur
- 314: Kopie
- 316: Blockchain-Struktur
- 318: Kommunikationsschnittstelle
- 320: Computersystem
- 322: Prozessor
- 324: Instruktionen
- 326: Speicher
- 328: Kommunikationsschnittstelle
- 340: Netzwerk

## Patentansprüche

1. Verfahren zur Integritätssicherung digital codierter Kopien (110, 120, 130, 314) eines digital codierten Ursprungsdokuments (100) unter Verwendung einer in die Kopien (110, 120, 130, 314) integrierten Blockchain-Struktur (111, 121, 131, 200, 201, 229, 231, 312, 316) zur Protokollierung der Abstammungshistorie der Kopien,
wobei das Verfahren umfasst:
• Bereitstellen einer ersten digital codierten Kopiervorlage (110), welche Daten (102) des digital codierten Ursprungsdokuments (100) und eine Blockchain-Struktur (111) umfasst, in der die Abstammungshistorie der ersten Kopiervorlage (110) protokolliert ist,
• Erstellen einer ersten digital codierten Kopie (120, 130, 314) von Daten (102) der ersten Kopiervorlage (110), wobei die kopierten Daten (102) der ersten Kopie (120, 130, 314) die Daten (102) des digital codierten Ursprungsdokuments (100) und die Blockchain-Struktur (111) der ersten Kopiervorlage (110) umfassen,
• Hinzufügen eines zusätzlichen Blocks (128, 136) zu der kopierten Blockchain-Struktur (111), wobei der zusätzliche Block (128, 136) der Kopiervorlage (110) zugeordnet ist, wobei der zusätzliche Block (128, 136) einen Identifikator (104) der Kopiervorlage (110) und ein Prüfmerkmal (PM) der kopierten Daten (102) umfasst, welcher eine Integritätsprüfung der kopierten Daten (102) inklusive der kopierten Blockchain-Struktur (111) ermöglicht,
wobei es sich bei den Blockchain-Struktur (111) um eine bidirektional verkettete Blockchain-Struktur handelt und das Hinzufügen des zusätzlichen Blocks (128, 136, 202) zu den Blockchain-Strukturen (111) im Zuge eines Kopiervorgangs ferner jeweils umfasst:
• Bereitstellen einer kopiervorgangsunabhängigen Verkettungsfunktion (210) in Form einer Hash-Funktion,
• Ableiten einer kopiervorgangsindividuellen bidirektionalen Verkettungsfunktion (212) als Prüfmerkmal (PM) in Form eines Hashwerts aus der kopiervorgangsunabhängigen Verkettungsfunktion (210),
wobei für das Ableiten ein Dateninhalt der ersten Kopie (120, 130, 314), welche im Zuge eines Kopiervorgangs erstellt wird, als ein erster Parameter und ein Dateninhalt der ersten Kopiervorlage (110), welche für den Kopiervorgang verwendet wird, als ein zweiter Parameter verwendet werden, sodass die kopiervorgangsindividuelle bidirektionale Verkettungsfunktion (212) paarweise sowohl von der erstellten ersten Kopie (120, 130, 314) als auch von der verwendeten ersten Kopiervorlage (110) abhängig ist,
• bidirektionales Verketten des hinzuzufügenden ersten Blocks (116, 128, 136, 202) mit einem zuletzt hinzugefügten Block der entsprechenden Blockchain-Struktur (111), wobei das bidirektionale Verketten ein Hinzufügen der kopiervorgangsindividuellen bidirektionalen Verkettungsfunktion (212) als Prüfmerkmal (PM) sowohl zu dem hinzuzufügenden Block (116, 128, 136, 202) als auch zu dem zuletzt hinzugefügten Block (116, 127, 204) der entsprechenden Blockchain-Struktur (101, 111, 121, 131, 200, 201, 229, 231, 312, 316) umfasst.

2. Verfahren nach Anspruch 1, wobei das Bereitstellen der ersten Kopiervorlage (110) umfasst:
• Bereitstellen einer zweiten digital codierten Kopiervorlage (100), welche die Daten (102) des digital codierten Ursprungsdokuments (100) umfasst,
• Erstellen der ersten Kopiervorlage (110) als einer zweiten digital codierten Kopie (110) von Daten (102) der zweiten digital codierten Kopiervorlage (100), wobei die kopierten Daten (102) der zweiten Kopie (110) die Daten (102) des digital codierten Ursprungsdokuments (100) umfassen,
• Hinzufügen eines Blocks (116) der Blockchain-Struktur (111) zu der zweiten Kopie (110), wobei der Block (116) der zweiten Kopiervorlage (100) zugeordnet ist, wobei der Block (116) einen Identifikator (104) der zweiten Kopiervorlage (100) und ein Prüfmerkmal (PM) der kopierten Daten (102) umfasst, welcher eine Integritätsprüfung der kopierten Daten (102) der zweiten Kopie (110) ermöglicht.

3. Verfahren nach Anspruch 2, wobei es sich bei der zweiten digital codierten Kopiervorlage (100) um das digital codierte Ursprungsdokument handelt oder
wobei es sich bei der zweiten digital codierten Kopiervorlage um eine dritte Kopie mit den kopierten Daten (102) des digital codierten Ursprungsdokuments (100) handelt,
wobei die zweite Kopiervorlage eine Blockchain-Struktur umfasst, wobei die Blockchain-Struktur einen Block für jeden Kopiervorgang der Abstammungshistorie der zweiten Kopiervorlage ausgehend von dem digital codierten Ursprungsdokument (100) bis hin zu der Erstellung der zweiten Kopiervorlage umfasst, wobei die Blöcke jeweils der Kopiervorlage zugeordnet sind, welche für den entsprechenden Kopiervorgang verwendet wurde, wobei jeder der Blöcke jeweils einen Identifikator der Kopiervorlage umfasst, welcher der entsprechende Block zugeordnet ist, und wobei jeder der Blöcke jeweils ein Prüfmerkmal der kopierten Daten (102) des entsprechenden Kopiervorgangs umfasst, welcher eine Integritätsprüfung der kopierten Daten (102) inklusive der kopierten Blockchain-Struktur des entsprechenden Kopiervorgangs ermöglicht,
wobei die kopierten Daten (102) der zweiten Kopie die Blockchain-Struktur der zweiten Kopiervorlage umfassen und wobei das Hinzufügen des Blocks zu der zweiten Kopie ein Erweitern der kopierten Blockchain-Struktur um den entsprechenden Block umfasst,
wobei das Prüfmerkmal der kopierten Daten (102) eine Integritätsprüfung der kopierten Daten (102) der zweiten Kopie inklusive der kopierten Blockchain-Struktur ermöglicht.

4. Verfahren nach einem der vorangehenden Ansprüche, wobei die kopierten Daten (102) in einer Auszeichnungssprache editiert sind, wobei die kopierten Daten (102) jeweils zumindest eine Auszeichnungsmarkierung für zumindest ein Datenelement (150) der kopierten Daten (102) des Ursprungsdokuments (100) umfassen, wobei die Auszeichnungsmarkierung des Datenelements (150) die Blockchain-Struktur (111, 121, 131, 200, 201, 229, 231, 312, 316) der Kopie als ein Attribut umfasst,
wobei die kopierten Daten (102) insbesondere jeweils eine Mehrzahl von Auszeichnungsmarkierungen umfassen, wobei jede der Auszeichnungsmarkierungen jeweils einem Datenelement (150) der kopierten Daten (102) des Ursprungsdokuments (100) zugeordnet ist, wobei für jedes der entsprechenden Datenelemente (150) eine eigenständige Blockchain-Struktur (111, 121, 131, 200, 201, 229, 231, 312, 316) bereitgestellt wird, welche die Auszeichnungsmarkierung des jeweiligen Datenelements (150) als ein Attribut umfasst, und/oder
wobei es sich bei der Auszeichnungssprache insbesondere um eine HTML- und/oder XML-Sprache handelt, wobei die Auszeichnungsmarkierungen jeweils zumindest ein Tag (152, 153) umfassen, welches die Blockchain-Struktur (111, 121, 131, 200, 201, 229, 231, 312, 316) als ein Attribut umfasst.

5. Verfahren nach einem der Ansprüche 2 bis 4, wobei das Verfahren ferner umfasst:
auf das Hinzufügen des Blocks (116) zu der zweiten Kopie (110) hin, Aktualisieren der Blockchain-Strukturen aller Kopien, welche die Abstammungshistorie der zweiten Kopie (110) umfassen, wobei das Aktualisieren jeweils ein Ergänzen der entsprechenden Blockchain-Struktur ) um den hinzugefügten Block (116) umfasst.

6. Verfahren nach einem der vorangehenden Ansprüche, wobei das Verfahren ferner umfasst:
auf das Hinzufügen des zusätzlichen Blocks (128, 136) zu der kopierten Blockchain-Struktur (111) der ersten Kopiervorlage (110) hin, Aktualisieren der Blockchain-Strukturen aller Kopien, welche die Abstammungshistorie der ersten Kopie (110) umfassen, wobei das Aktualisieren jeweils ein Ergänzen der entsprechenden Blockchain-Struktur um den zusätzlichen Block umfasst.

7. Verfahren nach einem der vorangehenden Ansprüche, wobei das Ursprungsdokument (100) eine Blockchain-Struktur (101, 111) umfasst,
wobei das Verfahren insbesondere ferner umfasst:
auf das Hinzufügen des Blocks (116, 128, 136) zu der zweiten Kopie (110, 120, 130, 314) hin, Aktualisieren der Blockchain-Struktur (101, 111) des Ursprungsdokuments (100), wobei das Aktualisieren ein Ergänzen der Blockchain-Struktur des Ursprungsdokuments (100) um den hinzugefügten Block (116, 128, 136) umfasst,
und/oder wobei das Verfahren insbesondere ferner umfasst:
auf das Hinzufügen des zusätzlichen Blocks (116, 128, 136) zu der kopierten Blockchain-Struktur der ersten Kopiervorlage (110) hin, Aktualisieren der Blockchain-Strukturen (101, 111) des Ursprungsdokuments (100), wobei das Aktualisieren ein Ergänzen der Blockchain-Struktur (100, 101) des Ursprungsdokuments (100) um den zusätzlichen Block (116, 128, 136) umfasst.

8. Verfahren nach einem der vorangehenden Ansprüche, wobei das Verfahren ferner eine Integritätsprüfung der ersten Kopie (120, 130, 314) umfasst, wobei die Prüfung umfasst:
• Zugreifen auf das Ursprungsdokument (100),
• Erzeugen eines Referenzmerkmals für das Prüfmerkmal (PM) des zusätzlichen Blocks (128, 136) unter Verwendung des Ursprungsdokuments (100) und der von der Blockchain-Struktur (121, 131, 200, 201, 229, 231, 312, 316) der ersten Kopie (120, 130, 314) protokollierten Abstammungshistorie der ersten Kopie (120, 130, 314),
• Vergleichen des Referenzmerkmals mit dem Prüfmerkmal (PM) des zusätzlichen Blocks (128, 136),
• im Fall einer Übereinstimmung des Referenzmerkmals mit dem Prüfmerkmal (PM), Bestätigen der Integrität der ersten Kopie (120, 130, 314),
wobei insbesondere im Fall einer fehlenden Übereinstimmung des Referenzmerkmals mit dem Prüfmerkmal (PM) die Integrität der ersten Kopie (120, 130, 314) verneint wird,
und/oder wobei die Integritätsprüfung der ersten Kopie (120, 130, 314) umfasst:
• Zugreifen auf eine der Kopien (110), welche die Abstammungshistorie der ersten Kopie (120, 130, 314) umfasst, die die Blockchain-Struktur (121, 131, 200, 201, 229, 231, 312, 316) der ersten Kopie (120, 130, 314) protokolliert,
• Erzeugen eines Referenzmerkmals für das Prüfmerkmal (PM) des zusätzlichen Blocks (116) unter Verwendung der Kopie (110), auf welche zugegriffen wird, und der protokollierten Abstammungshistorie der ersten Kopie (120, 130, 314),
• Vergleichen des Referenzmerkmals mit dem Prüfmerkmal (PM) des zusätzlichen Blocks (116),
• im Fall einer Übereinstimmung des Referenzmerkmals mit dem Prüfmerkmal (PM), Bestätigen der Integrität der ersten Kopie (120, 130, 314) im Verhältnis zu der Kopie, auf weiche zugegriffen wurde,
wobei insbesondere im Fall einer fehlenden Übereinstimmung des Referenzmerkmals mit dem Prüfmerkmal (PM) die Integrität der ersten Kopie (120, 130, 314) verneint wird.

9. Verfahren nach einem der vorangehenden Ansprüche, wobei das Verfahren ferner eine Integritätsprüfung der protokollierten Abstammungshistorie der ersten Kopie (110, 120, 130, 314) umfasst, wobei die Prüfung umfasst:
• Zugreifen auf das Ursprungsdokument (100) sowie die Kopien (110), welche die Abstammungshistorie der ersten Kopie (120, 130, 314) umfasst, die die Blockchain-Struktur (121, 131, 200, 201, 229, 231, 312, 316) der ersten Kopie (120, 130, 314) protokolliert,
• Erzeugen von Referenzmerkmalen für die Prüfmerkmale (PM) der einzelnen Blöcke der Blockchain-Struktur (121, 131, 200, 201, 229, 231, 312, 316) der ersten Kopie (120, 130, 314) unter Verwendung des Ursprungsdokuments (100) sowie der Kopien (110), auf weiche zugegriffen wird,
• Vergleichen der Prüfmerkmale (PM) der einzelnen Blöcke mit dem für das jeweilige Prüfmerkmal (PM) erzeugten Referenzmerkmal,
• im Fall einer Übereinstimmung der Prüfmerkmale (PM) mit den jeweiligen Referenzmerkmalen, Bestätigen der Integrität der protokollierten Abstammungshistorie der ersten Kopie (120, 130, 314),
wobei insbesondere im Fall einer fehlenden Übereinstimmung eines der Prüfmerkmale (PM) mit dem für das jeweilige Prüfmerkmal (PM) erzeugten Referenzmerkmal die Integrität der protokollierten Abstammungshistorie der ersten Kopie (120, 130, 314) verneint wird,
und/oder wobei die Identifikatoren (104, 114) der Kopiervorlagen (100, 110) jeweils eine Adresse zum Aufrufen der entsprechenden Kopiervorlage (100, 110) umfassen.

10. Verfahren zum integritätssicheren Speichern von digital codierten Daten (102), wobei das Verfahren umfasst:
• Erstellen eines digital codierten Dokuments (110, 120, 130, 314), welches die zu speichernden digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem der vorangehend Ansprüche erstellt wird,
• Speichern des digital codierten Dokuments (110, 120, 130, 314) in einem Datenspeicher (306).

11. Verfahren zum integritätssicheren Versenden von digital codierten Daten (102) über ein Netzwerk (340), wobei das Verfahren umfasst:
• Erstellen eines digital codierten Dokuments (110, 120, 130, 314), welches die zu versendenden digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem der Ansprüche 1 bis 9 erstellt wird,
• Versenden des digital codierten Dokuments (110, 120, 130, 314) über das Netzwerk (340).

12. Verfahren zum integritätssicheren Anfordern von digital codierten Daten (102) über ein Netzwerk (340), wobei das Verfahren umfasst:
• Anfordern eines digital codierten Dokuments (110, 120, 130, 314) über das Netzwerk (340), wobei das digital codierte Dokument (110, 120, 130, 314) die digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem der Ansprüche 1 bis 9 erstellt wurde,
• in Antwort auf das Anfordern, Empfangen des angeforderten digital codierten Dokuments (110, 120, 130, 314) über das Netzwerk (340).

13. Computersystem (300) zur Integritätssicherung digital codierter Kopien (110, 120, 130, 314) eines digital codierten Ursprungsdokuments (100) unter Verwendung einer in die Kopien (110, 120, 130, 314) integrierten Blockchain-Struktur (111, 121, 131, 200, 201, 229, 231, 312, 316) zur Protokollierung der Abstammungshistorie der Kopien (110, 120, 130, 314), wobei das Computersystem (300) einen Prozessor (302) und einen Speicher (306) mit maschinenlesbaren Instruktionen (304, 308) umfasst, wobei ein Ausführen der maschinenlesbaren Instruktionen (304, 308) durch den Prozessor (302) das Computersystem (300) dazu veranlasst, ein Verfahren auszuführen, welches umfasst:
• Bereitstellen einer Kopiervorlage (100, 110, 120, 310), welche Daten (102) des digital codierten Ursprungsdokuments (100) und eine Blockchain-Struktur (111, 121, 131, 200, 201, 229, 231, 312, 316) umfasst, in der die Abstammungshistorie der Kopiervorlage (100, 110, 120, 310) protokolliert ist,
• Erstellen einer digital codierten Kopie (110, 120, 130, 314) von Daten (102) einer digital codierten Kopiervorlage (100, 110, 120, 310), wobei die kopierten Daten (102) die Daten (102) des digital codierten Ursprungsdokuments (100) und die Blockchain-Struktur (111, 121, 131, 200, 201, 229, 231, 312, 316) der Kopiervorlage (100, 110, 120, 310) umfassen,
• Hinzufügen eines zusätzlichen Blocks (116, 128, 136) zu der kopierten Blockchain-Struktur (111, 121, 131, 200, 201, 229, 231, 312, 316), wobei der zusätzliche Block (116, 128, 136), welcher der Kopiervorlage (100, 110, 120, 310) zugeordnet ist, einen Identifikator (104, 114, 124, 134) der Kopiervorlage (100, 110, 120, 310) und ein Prüfmerkmal (PM) der kopierten Daten (102) umfasst, welcher eine Integritätsprüfung der kopierten Daten (102) inklusive der kopierten Blockchain-Struktur (111, 121, 131, 200, 201, 229, 231, 312, 316) ermöglicht,
wobei es sich bei den Blockchain-Struktur (111) um eine bidirektional verkettete Blockchain-Struktur handelt und das Hinzufügen des zusätzlichen Blocks (128, 136, 202) zu den Blockchain-Strukturen (111) im Zuge eines Kopiervorgangs ferner jeweils umfasst:
• Bereitstellen einer kopiervorgangsunabhängigen Verkettungsfunktion (210) in Form einer Hash-Funktion,
• Ableiten einer kopiervorgangsindividuellen bidirektionalen Verkettungsfunktion (212) als Prüfmerkmal (PM) in Form eines Hashwerts aus der kopiervorgangsunabhängigen Verkettungsfunktion (210),
wobei für das Ableiten ein Dateninhalt der ersten Kopie (120, 130, 314), welche im Zuge eines Kopiervorgangs erstellt wird, als ein erster Parameter und ein Dateninhalt der ersten Kopiervorlage (110), welche für den Kopiervorgang verwendet wird, als ein zweiter Parameter verwendet werden, sodass die kopiervorgangsindividuelle bidirektionale Verkettungsfunktion (212) paarweise sowohl von der erstellten ersten Kopie (120, 130, 314) als auch von der verwendeten ersten Kopiervorlage (110) abhängig ist,
• bidirektionales Verketten des hinzuzufügenden ersten Blocks (116, 128, 136, 202) mit einem zuletzt hinzugefügten Block der entsprechenden Blockchain-Struktur (111), wobei das bidirektionale Verketten ein Hinzufügen der kopiervorgangsindividuellen bidirektionalen Verkettungsfunktion (212) als Prüfmerkmal (PM) sowohl zu dem hinzuzufügenden Block (116, 128, 136, 202) als auch zu dem zuletzt hinzugefügten Block (116, 127, 204) der entsprechenden Blockchain-Struktur (101, 111, 121, 131, 200, 201, 229, 231, 312, 316) umfasst.

14. Elektronisches Datenspeichersystem zum integritätssicheren Speichern von digital codierten Daten (102), welches ein Computersystem (300) nach Anspruch 13 umfasst, wobei das Computersystem (300) einen Prozessor (302) und einen Speicher (306) mit maschinenlesbaren Instruktionen (304, 308) umfasst, wobei ein Ausführen der maschinenlesbaren Instruktionen (304, 308) durch den Prozessor (302) das Datenspeichersystem dazu veranlasst, ein Verfahren auszuführen, welches umfasst:
• Erstellen eines digital codierten Dokuments (110, 120, 130, 314), welches die zu speichernden digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem der Ansprüche 1 bis 9 erstellt wird,
• Speichern des digital codierten Dokuments (110, 120, 130, 314) in dem Speicher (306) des elektronischen Datenspeichersystems (300).

15. Telekommunikationssystem zum integritätssicheren Versenden von digital codierten Daten (102) über ein Netzwerk (340), welches ein Computersystem (300) nach Anspruch 13 umfasst, wobei das Computersystem (300) einen Prozessor (302) und einen Speicher (306) mit maschinenlesbaren Instruktionen (304, 308) umfasst, wobei das Telekommunikationssystem (300) ferner eine Kommunikationsschnittstelle (318) zur Kommunikation über das Netzwerk (340) umfasst, wobei ein Ausführen der maschinenlesbaren Instruktionen (304, 308) durch den Prozessor (302) das Telekommunikationssystem (300) dazu veranlasst, ein Verfahren auszuführen, welches umfasst:
• Erstellen eines digital codierten Dokuments (110, 120, 130, 314), welches die zu versendenden digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem Ansprüche 1 bis 9 erstellt wird,
• Versenden des digital codierten Dokuments (110, 120, 130, 314) über das Netzwerk (340).

16. System, welches ein erstes Telekommunikationssystem nach Anspruch 15 zum integritätssicheren Versenden von digital codierten Daten (102) über ein Netzwerk (340) und ein zweites Telekommunikationssystem (320) zum integritätssicheren Aufrufen von digital codierten Daten (102) über das Netzwerk (340) umfasst, wobei das Telekommunikationssystem (320) einen Prozessor (322) und einen Speicher (326) mit maschinenlesbaren Instruktionen (324) umfasst, wobei das Telekommunikationssystem (320) ferner eine Kommunikationsschnittstelle (328) zur Kommunikation über das Netzwerk (340) umfasst, wobei ein Ausführen der maschinenlesbaren Instruktionen (324) durch den Prozessor (322) das Telekommunikationssystem (320) dazu veranlasst, ein Verfahren auszuführen, welches umfasst:
• Anfordern eines digital codierten Dokuments (110, 120, 130, 314) von dem ersten Telekommunikationssystem über das Netzwerk (340), wobei das digital codierte Dokument (110, 120, 130, 314) die digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem Ansprüche 1 bis 9 erstellt wurde,
• in Antwort auf das Anfordern, Empfangen des angeforderten digital codierten Dokuments (110, 120, 130, 314) von dem ersten Telekommunikationssystem über das Netzwerk (340).

## Claims

1. Method for the integrity protection of digitally coded copies (110, 120, 130, 314) of a digitally coded original document (100) by using a blockchain structure (111, 121, 131, 200, 201, 229, 231, 312, 316) integrated into the copies (110, 120, 130, 314) to log the descent history of the copies,
wherein the method comprises:
• providing a first digitally coded copying template (110), which comprises data (102) of the digitally coded original document (100) and a blockchain structure (111), in which the descent history of the first copying template (110) is logged,
• creating a first digitally coded copy (120, 130, 314) of data (102) of the first copying template (110), wherein the copied data (102) of the copy (120, 130, 314) comprises the data (102) of the digitally coded original document (100) and the blockchain structure (111) of the first copying template (110),
• adding an additional block (128, 136) to the copied blockchain structure (111), wherein the additional block (128, 136) is associated with the copying template (110), wherein the additional block (128, 136) comprises an identifier (104) of the copying template (110) and a checking feature (PM) of the copied data (102), which allows an integrity check of the copied data (102) including the copied blockchain structure (111),
wherein the blockchain structure (111) is a bidirectionally linked blockchain structure and adding the additional block (128, 136, 202) to the blockchain structures (111) as part of a copying process further comprises, in each case:
• providing a copying-process-independent linking function (210) in the form of a hash function,
• deriving a copying-process-customized bidirectional linking function (212) as a checking feature (PM) in the form of a hash value from the copying-process-independent linking function (210), wherein, for deriving this, data content of the first copy (120, 130, 314) created as part of a copying process is used as a first parameter and data content of the first copying template (110) used for the copying process is used as a second parameter, such that the copying-process-customized bidirectional linking function (212) is dependent, in a paired manner, both on the created first copy (120, 130, 314) and on the first copying template (110) used,
• bidirectionally linking the first block (116, 128, 136, 202) to be added to a last-added block of the corresponding blockchain structure (111), wherein the bidirectional linking comprises adding the copying-process-customized bidirectional linking function (212) as a checking feature (PM) both to the block (116, 128, 136, 202) to be added and to the last-added block (116, 127, 204) of the corresponding blockchain structure (101, 111, 121, 131, 200, 201, 229, 231, 312, 316).

2. Method according to claim 1, wherein providing the first copying template (110) comprises:
• providing a second digitally coded copying template (100), which comprises the data (102) of the digitally coded original document (100),
• creating the first copying template (110) as a second digitally coded copy (110) of data (102) of the second digitally coded copying template (100), wherein the copied data (102) of the second copy (110) comprises the data (102) of the digitally coded original document (100),
• adding a block (116) of the blockchain structure (111) to the second copy (110), wherein the block (116) is associated with the second copying template (100), wherein the block (116) comprises an identifier (104) of the second copying template (100) and a checking feature (PM) of the copied data (102), which allows an integrity check of the copied data (102) of the second copy (110).

3. Method according to claim 2, wherein the second digitally coded copying template (100) is the digitally coded original document or
wherein the second digitally coded copying template is a third copy having the copied data (102) of the digitally coded original document (100),
wherein the second copying template comprises a blockchain structure, wherein the blockchain structure comprises a block for each copying process of the descent history of the second copying template starting from the digitally coded original document (100) through to the creation of the second copying template, wherein the blocks are each associated with the copying template that has been used for the corresponding copying process, wherein each of the blocks comprises an identifier of the copying template that is associated with the corresponding block, and wherein each of the blocks comprises a checking feature of the copied data (102) of the corresponding copying process, which allows for an integrity check of the copied data (102) including the copied blockchain structure of the corresponding copying process,
wherein the copied data (102) of the second copy comprise the blockchain structure of the second copying template and wherein adding the block to the second copy comprises extending the copied blockchain structure by the corresponding block,
wherein the checking feature of the copied data (102) allows for an integrity check of the copied data (102) of the second copy including the copied blockchain structure.

4. Method according to any of the preceding claims, wherein the copied data (102) are edited in a markup language, wherein the copied data (102) comprises at least one markup for at least one data element (150) of the copied data (102) of the original document (100) in each case,
wherein the markup of the data element (150) comprises the blockchain structure (111, 121, 131, 200, 201, 229, 231, 312, 316) of the copy as an attribute,
wherein the copied data (102) in particular comprise a plurality of markups, wherein each of the markups is associated with a data element (150) of the copied data (102) of the original document (100), wherein a separate blockchain structure (111, 121, 131, 200, 201, 229, 231, 312, 316), which comprises the markup of the relevant data element (150) as an attribute, is provided for each of the corresponding data elements (150), and/or
wherein the markup language is in particular an HTML and/or XML language, wherein the markups each comprise at least one tag (152, 153) which comprises the blockchain structure (111, 121, 131, 200, 201, 229, 231, 312, 316) as an attribute.

5. Method according to any of claims 2 to 4, wherein the method further comprises:
when the block (116) is added to the second copy (110), updating the blockchain structures of all the copies which comprise the descent history of the second copy (110), wherein the updating comprises supplementing the corresponding blockchain structure with the added block (116) in each case.

6. Method according to any of the preceding claims, wherein the method further comprises:
when the additional block (128, 136) is added to the copied blockchain structure (111) of the first copying template (110), updating the blockchain structures of all the copies which comprise the descent history of the first copy (110), wherein the updating comprises supplementing the corresponding blockchain structure with the additional block in each case.

7. Method according to any of the preceding claims, wherein the original document (100) comprises a blockchain structure (101, 111),
wherein the method in particular further comprises:
when the block (116, 128, 136) is added to the second copy (110, 120, 130, 314), updating the blockchain structure (101, 111) of the original document (100), wherein the updating comprises supplementing the blockchain structure of the original document (100) with the added block (116, 128, 136),
and/or wherein the method in particular further comprises:
when the additional block (116, 128, 136) is added to the copied blockchain structure of the first copying template (110), updating the blockchain structure (101, 111) of the original document (100), wherein the updating comprises supplementing the blockchain structure (100, 101) of the original document (100) with the additional block (116, 128, 136).

8. Method according to any of the preceding claims, wherein the method further comprises an integrity check of the first copy (120, 130, 314), wherein the check comprises:
• accessing the original document (100),
• generating a reference feature for the checking feature (PM) of the additional block (128, 136) using the original document (100) and the descent history of the first copy (120, 130, 314) logged by the blockchain structure (121, 131, 200, 201, 229, 231, 312, 316) of the first copy (120, 130, 314),
• comparing the reference feature with the checking feature (PM) of the additional block (128, 136),
• if the reference feature matches the checking feature (PM), confirming the integrity of the first copy (120, 130, 314),
wherein, in particular if the reference feature does not match the checking feature (PM), the integrity of the first copy (120, 130, 314) is denied,
and/or wherein the integrity check of the first copy (120, 130, 314) comprises:
• accessing one of the copies (110) which comprises the descent history of the first copy (120, 130, 314) which the blockchain structure (121, 131, 200, 201, 229, 231, 312, 316) of the first copy (120, 130, 314) logs,
• generating a reference feature for the checking feature (PM) of the additional block (116) using the copy (110) that is being accessed and the logged descent history of the first copy (120, 130, 314),
• comparing the reference feature with the checking feature (PM) of the additional block (116),
• if the reference feature matches the checking feature (PM), confirming the integrity of the first copy (120, 130, 314) in relation to the copy which was accessed,
wherein, in particular if the reference feature does not match the checking feature (PM), the integrity of the first copy (120, 130, 314) is denied.

9. Method according to any of the preceding claims, wherein the method further comprises an integrity check of the logged descent history of the first copy (110, 120, 130, 314), wherein the check comprises:
• accessing the original document (100) and the copies (110) which comprise the descent history of the first copy (120, 130, 314) which the blockchain structure (121, 131, 200, 201, 229, 231, 312, 316) of the first copy (120, 130, 314) logs,
• generating reference features for the checking features (PM) of the individual blocks of the blockchain structure (121, 131, 200, 201, 229, 231, 312, 316) of the first copy (120, 130, 314) using the original document (100) and the copies (110) that are being accessed,
• comparing the checking features (PM) of the individual blocks with the reference feature generated for the relevant checking feature (PM),
• if the checking features (PM) match the respective reference features, confirming the integrity of the logged descent history of the first copy (120, 130, 314),
wherein, in particular if one of the checking features (PM) does not match the reference feature generated for the relevant checking feature (PM), the integrity of the logged descent history of the first copy (120, 130, 314) is denied,
and/or wherein the identifiers (104, 114) of the copying templates (100, 110) each comprise an address for retrieving the corresponding copying template (100, 110).

10. Method for the integrity-protected storage of digitally coded data (102), wherein the method comprises:
• creating a digitally coded document (110, 120, 130, 314) which comprises the digitally coded data (102) to be stored, wherein the digitally coded data (102) are copied data of a digitally coded original document (100) and wherein the digitally coded document (110, 120, 130, 314) is created as a digitally coded copy using a method according to any of the preceding claims,
• storing the digitally coded document (110, 120, 130, 314) in a data memory (306).

11. Method for the integrity-protected transmission of digitally coded data (102) over a network (340), wherein the method comprises:
• creating a digitally coded document (110, 120, 130, 314) which comprises the digitally coded data (102) to be transmitted, wherein the digitally coded data (102) are copied data of a digitally coded original document (100) and wherein the digitally coded document (110, 120, 130, 314) is created as a digitally coded copy using a method according to any of claims 1 to 9,
• transmitting the digitally coded document (110, 120, 130, 314) over the network (340).

12. Method for the integrity-protected request of digitally coded data (102) over a network (340), wherein the method comprises:
• requesting a digitally coded document (110, 120, 130, 314) over the network (340), wherein the digitally coded document (110, 120, 130, 314) comprises the digitally coded data (102), wherein the digitally coded data (102) are copied data of a digitally coded original document (100) and wherein the digitally coded document (110, 120, 130, 314) has been created as a digitally coded copy using a method according to any of claims 1 to 9,
• in response to the request, receiving the requested digitally coded document (110, 120, 130, 314) over the network (340).

13. Computer system (300) for the integrity protection of digitally coded copies (110, 120, 130, 314) of a digitally coded original document (100) by using a blockchain structure (111, 121, 131, 200, 201, 229, 231, 312, 316) integrated into the copies (110, 120, 130, 314) to log the descent history of the copies (110, 120, 130, 314), wherein the computer system (300) comprises a processor (302) and a memory (306) containing machine-readable instructions (304, 308), wherein the machine-readable instructions (304, 308) being executed by the processor (302) prompts the computer system (300) to perform a method which comprises:
• providing a copying template (100, 110, 120, 310), which comprises data (102) of the digitally coded original document (100) and a blockchain structure (111, 121, 131, 200, 201, 229, 231, 312, 316), in which the descent history of the copying template (100, 110, 120, 310) is logged,
• creating a digitally coded copy (110, 120, 130, 314) of data (102) of a digitally coded copying template (100, 110, 120, 310), wherein the copied data (102) comprise the data (102) of the digitally coded original document (100) and the blockchain structure (111, 121, 131, 200, 201, 229, 231, 312, 316) of the copying template (100, 110, 120, 310),
• adding an additional block (116, 128, 136) to the copied blockchain structure (111, 121, 131, 200, 201, 229, 231, 312, 316), wherein the additional block (116, 128, 136), which is associated with the copying template (100, 110, 120, 310), comprises an identifier (104, 114, 124, 134) of the copying template (100, 110, 120, 310) and a checking feature (PM) of the copied data (102), which allows an integrity check of the copied data (102) including the copied blockchain structure (111, 121, 131, 200, 201, 229, 231, 312, 316),
wherein the blockchain structure (111) is a bidirectionally linked blockchain structure and adding the additional block (128, 136, 202) to the blockchain structures (111) as part of a copying process further comprises, in each case:
• providing a copying-process-independent linking function (210) in the form of a hash function,
• deriving a copying-process-customized bidirectional linking function (212) as a checking feature (PM) in the form of a hash value from the copying-process-independent linking function (210), wherein, for deriving this, data content of the first copy (120, 130, 314) created as part of a copying process is used as a first parameter and data content of the first copying template (110) used for the copying process is used as a second parameter, such that the copying-process-customized bidirectional linking function (212) is dependent, in a paired manner, both on the created first copy (120, 130, 314) and on the first copying template (110) used,
• bidirectionally linking the first block (116, 128, 136, 202) to be added to a last-added block of the corresponding blockchain structure (111), wherein the bidirectional linking comprises adding the copying-process-customized bidirectional linking function (212) as a checking feature (PM) both to the block (116, 128, 136, 202) to be added and to the last-added block (116, 127, 204) of the corresponding blockchain structure (101, 111, 121, 131, 200, 201, 229, 231, 312, 316).

14. Electronic data memory system for the integrity-protected storage of digitally coded data (102), which system comprises a computer system (300) according to claim 13, wherein the computer system (300) comprises a processor (302) and a memory (306) having machine-readable instructions (304, 308), wherein execution of the machine-readable instructions (304, 308) by the processor (302) prompts the data memory system to perform a method which comprises:
• creating a digitally coded document (110, 120, 130, 314) which comprises the digitally coded data (102) to be stored, wherein the digitally coded data (102) are copied data of a digitally coded original document (100) and wherein the digitally coded document (110, 120, 130, 314) is created as a digitally coded copy using a method according to any of claims 1 to 9,
• storing the digitally coded document (110, 120, 130, 314) in the memory (306) of the electronic data memory system (300).

15. Telecommunications system for the integrity-protected transmission of digitally coded data (102) over a network (340), which system comprises a computer system (300) according to claim 13, wherein the computer system (300) comprises a processor (302) and a memory (306) having machine-readable instructions (304, 308), wherein the telecommunications system (300) further comprises a communication interface (318) for communicating over the network (340), wherein execution of the machine-readable instructions (304, 308) by the processor (302) prompts the telecommunications system (300) to perform a method which comprises:
• creating a digitally coded document (110, 120, 130, 314) which comprises the digitally coded data (102) to be transmitted, wherein the digitally coded data (102) are copied data of a digitally coded original document (100) and wherein the digitally coded document (110, 120, 130, 314) is created as a digitally coded copy using a method according to any of claims 1 to 9,
• transmitting the digitally coded document (110, 120, 130, 314) over the network (340).

16. System comprising a first telecommunications system according to claim 15 for the integrity-protected transmission of digitally coded data (102) over a network (340) and a second telecommunications system (320) for the integrity-protected retrieval of digitally coded data (102) over the network (340), wherein the telecommunications system (320) comprises a processor (322) and a memory (326) having machine-readable instructions (324), wherein the telecommunications system (320) further comprises a communication interface (328) for communicating over the network (340), wherein execution of the machine-readable instructions (324) by the processor (322) prompts the telecommunications system (320) to perform a method which comprises:
• requesting a digitally coded document (110, 120, 130, 314) by the first telecommunications system over the network (340), wherein the digitally coded document (110, 120, 130, 314) comprises the digitally coded data (102), wherein the digitally coded data (102) are copied data of a digitally coded original document (100) and wherein the digitally coded document (110, 120, 130, 314) has been created as a digitally coded copy using a method according to any of claims 1 to 9,
• in response to the request, receiving the requested digitally coded document (110, 120, 130, 314) over the network (340) from the first telecommunications system.

## Revendications

1. Procédé de protection de l'intégrité de copies (110, 120, 130, 314) codées sous format numérique d'un document source (100) codé sous format numérique moyennant l'emploi d'une structure de chaines de blocs (111, 121, 131, 200, 201, 229, 231, 312, 316) intégrée dans les copies (110, 120, 130, 314) afin d'enregistrer un historique d'origine des copies,
le procédé comprenant :
• la mise au point d'un premier modèle de copie (110) codé sous format numérique, lequel comprend des données (102) du document source (100) codé sous format numérique et une structure de chaines de blocs (111) dans laquelle l'historique d'origine du premier modèle de copie (110) est enregistré,
• l'établissement d'une première copie (120, 130, 314) codée sous format numérique de données (102) du premier modèle de copie (110), où les données (102) copiées de la première copie (120, 130, 314)) comprennent les données (102) du document source (100) codé sous format numérique et la structure de chaînes de blocs (111) du premier modèle de copie (110),
• l'ajout d'un bloc complémentaire (128, 136) à la structure de chaînes de blocs (111) copiée, où le bloc complémentaire (128, 136) est associé au modèle de copie (110), où le bloc complémentaire (128, 136) comprend un identificateur (104) du modèle de copie (110) et une caractéristique de vérification (PM) des données (102) copiés, laquelle permet une vérification de l'intégrité des données (102) copiées y compris de la structure de chaînes de blocs (111),
dans lequel, dans le cas de la structure de chaines de blocs (111), il s'agit d'une structure de chaînes de blocs concaténée de manière bidirectionnelle et l'ajout du bloc complémentaire (128, 136, 202) aux structures de chaines de blocs (111) dans le cadre d'un processus de copie comprend en outre respectivement :
• la mise au point d'une fonction de concaténation (210) indépendante du processus de copie sous la forme d'une fonction de hachage,
• la dérivation d'une fonction de concaténation (212) bidirectionnelle individuelle pour le processus de copie en tant que caractéristique de vérification (PM) sous forme d'une valeur de hachage à partir de la fonction de concaténation (210) indépendante du processus de copie, où, pour la dérivation, un contenu de donnée de la première copie (120, 130, 314), laquelle est établie dans le cadre d'un processus de copie, est employé en tant que premier paramètre et un contenu de donnée du premier modèle de copie (110), lequel est employé pour le processus de copie, est employé en tant que deuxième paramètre, de sorte que la fonction de concaténation (212) bidirectionnelle individuelle pour le processus de copie est dépendante appariée à la fois à la première copie (120, 130, 314) établie mais également au modèle de copie (110) employé,
• la concaténation bidirectionnelle du premier bloc (116, 128, 136, 202) à ajouter avec un bloc ajouté en dernier lieu de la structure de chaines de blocs (111) correspondante, où la concaténation bidirectionnelle comprend un ajout de la fonction de concaténation (212) bidirectionnelle individuelle pour le processus de copie en tant que caractéristique de vérification (PM) à la fois pour le bloc (116, 128, 136, 202) à ajouter et également le bloc (116, 127, 204) ajouté en dernier lieu de la structure de chaines de blocs (101, 111, 121, 131, 200, 201, 229, 231, 312, 316) correspondante.

2. Procédé selon la revendication 1, dans lequel la mise au point du premier modèle de copie (110) comprend :
• la mise au point d'un deuxième modèle de copie (100) codé sous format numérique, lequel comprend les données (102) du document source (100) codé sous format numérique,
• l'établissement du premier modèle de copie (110) sous forme d'une deuxième copie (110) codée sous format numérique de données (102) du deuxième modèle de copie (100) codé sous format numérique, où les données (102) copiées de la deuxième copie (110) comprennent les données (102) du document source (100) codé sous format numérique,
• l'ajout d'un bloc (116) de la structure de chaînes de blocs (111) à la deuxième copie (110) où le bloc (116) est associé au deuxième modèle de copie (100), où le bloc (116) comprend un identificateur (104) du deuxième modèle de copie (100) et une caractéristique de vérification (PM) des données (102) copiées, laquelle permet une vérification de l'intégrité des données (102) copiées de la deuxième copie (110).

3. Procédé selon la revendication 2, dans lequel, dans le cas du deuxième modèle de copie (100) codé sous format numérique, il s'agit du document source codé sous format numérique, ou
dans lequel, dans le cas du deuxième modèle de copie codé sous format numérique, il s'agit d'une troisième copie avec les données (102) copiées du document source (100) codé sous format numérique,
dans lequel le deuxième modèle de copie comprend une structure de chaînes de blocs, où la structure de chaînes de blocs comprend un bloc pour chaque processus de copie de l'historique d'origine du deuxième modèle de copie en partant du document source (100) codé sous format numérique jusqu'à l'établissement du deuxième modèle de copie, où les blocs sont respectivement associés au modèle de bloc, lequel a été employé pour le processus de copie correspondant, où chacun des blocs comprend respectivement un identificateur du modèle de copie, auquel le bloc correspondant est associé, et où chacun des blocs comprend respectivement une caractéristique de vérification des données (102) copiées du processus de copie correspondant, lequel permet une vérification de l'intégrité des données (102) copiées y compris de la structure de chaînes de blocs du processus de copie correspondant,
dans lequel les données (102) copiées de la deuxième copie comprennent la structure de chaines de blocs du deuxième modèle de copie et où l'ajout du bloc à la deuxième copie comprend un élargissement de la structure de chaîne de blocs équivalent au bloc en question,
dans lequel la caractéristique de vérification des données (102) copiées permet une vérification de l'intégrité des données (102) copiées de la deuxième copie y compris de la structure de chaînes de blocs.

4. Procédé selon l'une des revendications précédentes, dans lequel les données (102) copiées sont éditées dans un langage de balisage, où les données (102) copiées comprennent respectivement au moins un marquage de balisage pour au moins un élément de donnée (150) parmi les données (102) copiées du document source (100), où le marquage de balisage de l'élément de donnée (150) comprend la structure de chaines de blocs (111, 121, 131, 200, 201, 229, 231, 312, 316) de la copie sous la forme d'un attribut,
dans lequel les données (102) copiées comprennent en particulier respectivement une multiplicité de marquages de balisage, où chacun des marquages de baisage est respectivement associé à un élément de donnée (150) des données (102) copiées du document source (100), où, pour chacun des éléments de donnée (150) correspondants, une structure de chaînes de blocs (111, 121, 131, 200, 201, 229, 231, 312, 316) indépendante est mise au point, laquelle comprend le marquage de balisage de l'élément de donnée (150) respectif sous la forme d'un attribut, et/ou
dans lequel, dans le cas du langage de balisage, il s'agit en particulier d'un langage HTML et/ou XML, où les marquages de balisage comprennent respectivement au moins une étiquette (152, 153) laquelle comprend la structure de chaines de blocs (111, 121, 131, 200, 201, 229, 231, 312, 316) sous la forme d'un attribut.

5. Procédé selon l'une des revendications 2 à 4, le procédé comprenant en outre : suite à l'ajout du bloc (116) à la deuxième copie (110), l'actualisation des structures de chaines de blocs de toutes les copies, lesquelles comprennent l'historique d'origine de la deuxième copie (110), où l'actualisation comprend respectivement un complément de la structure de chaines de blocs correspondante équivalent au bloc (116) ajouté.

6. Procédé selon l'une des revendications précédentes, le procédé comprenant en outre : suite à l'ajout du bloc (128, 136) complémentaire à la structure de chaines de blocs (111) copiée du premier modèle de copie (110), l'actualisation des structures de chaines de blocs de toutes les copies, lesquelles comprennent l'historique d'origine de la première copie (110), où l'actualisation comprend respectivement un complément de la structure de chaines de blocs correspondante équivalent au bloc complémentaire.

7. Procédé selon l'une des revendications précédentes, dans lequel le document source (100) comprend une structure de chaines de blocs (101, 111),
en particulier, le procédé comprenant en outre :
suite à l'ajout du bloc (116, 128, 136) à la deuxième copie (110, 120, 130, 314), l'actualisation de la structure de chaines de blocs (101, 111) du document source (100), où l'actualisation comprend un complément de la structure de chaines de blocs du document source (100) équivalent au bloc (116, 128, 136) ajouté,
et/ou, en particulier, le procédé comprenant en outre :
suite à l'ajout du bloc complémentaire (116, 128, 136) à la structure de chaines de blocs copiée du premier modèle de copie (110), l'actualisation des structures de chaines de blocs (101, 111) du document source (100), où l'actualisation comprend un complément de la structure de chaines de blocs (100, 101) du document source (100) équivalent au bloc complémentaire (116, 128, 136).

8. Procédé selon l'une des revendications précédentes, où le procédé comprend en outre une vérification de l'intégrité de la première copie (120, 130, 314), la vérification comprenant :
• un accès au document source (100),
• la création d'une caractéristique de référence pour la caractéristique de vérification (PM) du bloc complémentaire (128, 136) moyennant l'emploi du document source (100) et de la structure de chaines de blocs (121, 131, 200, 201, 229, 231, 312, 316) de la première copie (120, 130, 314) de l'historique d'origine enregistré de la première copie (120, 130, 314),
• la comparaison de la caractéristique de référence avec la caractéristique de vérification (PM) du bloc complémentaire (128, 136),
• dans le cas d'une concordance de la caractéristique de référence avec la caractéristique de vérification (PM), la confirmation de l'intégrité de la première copie (120, 130 314),
dans lequel, en particulier, dans le cas d'une absence de concordance de la caractéristique de référence avec la caractéristique de vérification (PM), l'intégrité de la première copie (120, 130, 314) est reniée,
et/ou, dans lequel la vérification de l'intégrité de la première copie (120, 130, 314) comprend :
• l'accès à l'une des copies (110), laquelle comprend l'historique d'origine de la première copie (120, 130, 314) qui enregistre la structure de chaines de blocs (121, 131, 200, 201, 229, 231, 312, 316) de la première copie (120, 130, 314),
• la création d'une caractéristique de référence pour la caractéristique de vérification (PM) du bloc complémentaire (116) moyennant l'emploi de la copie (110), à laquelle on a accédé, et de l'historique d'origine enregistré de la première copie (120, 130, 314),
• la comparaison de la caractéristique de référence avec la caractéristique de vérification (PM) du bloc complémentaire (116),
• dans le cas d'une concordance de la caractéristique de référence avec la caractéristique de vérification (PM), la confirmation de l'intégrité de la première copie (120, 130, 314) par rapport à la copie à laquelle on a eu accès,
dans lequel, en particulier, dans le cas d'une absence de concordance de la caractéristique de référence avec la caractéristique de vérification (PM), l'intégrité de la première copie (120, 130, 314) est reniée.

9. Procédé selon l'une des revendications précédentes, où le procédé comprend en outre une vérification de l'intégrité de l'historique d'origine enregistré de la première copie (120, 130, 314), la vérification comprenant :
• l'accès au document source (100) ainsi qu'aux copies (110), lesquelles sont comprises dans l'historique d'origine de la première copie (110, 120, 130, 314), qui enregistre la structure de chaines de blocs (121, 131, 200, 201, 229, 231, 312, 316) de la première copie (120, 130, 314),
• la création de caractéristiques de référence pour les caractéristiques de vérification (PM) des blocs individuels de la structure de chaines de blocs (121, 131, 200, 201, 229, 231, 312, 316) de la première copie (120, 130, 314) moyennant l'emploi du document source (100) ainsi que des copies (110) auxquelles on a eu accès,
• la comparaison des caractéristiques de vérification (PM) des blocs individuels avec la caractéristique de référence créée pour la caractéristique de vérification (PM) respective,
• dans le cas d'une concordance des caractéristiques de vérification (PM) avec les caractéristiques de référence respectives, la confirmation de l'intégrité de l'historique d'origine enregistrée de la première copie (120, 130 314),
dans lequel, en particulier, dans le cas d'une absence de concordance d'une des caractéristiques de vérification (PM) avec la caractéristique de référence créée pour la caractéristique de vérification (PM) respective, l'intégrité de l'historique d'origine enregistré de la première copie (120, 130, 314) est reniée,
et/ou dans lequel les identificateurs (104, 114) des modèles de copies (100, 110) comprennent respectivement une adresse pour faire appel au modèle de copie (100, 110) correspondant.

10. Procédé d'enregistrement avec la protection de l'intégrité de données (102) codées sous format numérique, le procédé comprenant :
• l'établissement d'un document (110, 120, 130, 314) codé sous format numérique, lequel comprend les données (102) codées sous format numérique à enregistrer, où, dans le cas des données (102) codées sous format numérique, il s'agit de données copiées d'un document source (100) codé sous format numérique et où le document (110, 120, 130, 314) codé sous format numérique est établi sous la forme d'une copie codée sous format numérique moyennant l'emploi d'un procédé selon l'une des revendications précédentes,
• l'enregistrement du document (110, 120, 130, 314) codé sous format numérique dans une mémoire de données (306).

11. Procédé d'envoi avec la protection de l'intégrité de données (102) codées sous format numérique par le biais d'un réseau (340), le procédé comprenant :
• l'établissement d'un document (110, 120, 130, 314) codé sous format numérique, lequel comprend les données (102) codées sous format numérique à envoyer, où, dans le cas des données (102) codées sous format numérique, il s'agit de données copiées d'un document source (100) codé sous format numérique et où le document (110, 120, 130, 314) codé sous format numérique est établi sous forme de copie codée sous format numérique moyennant l'emploi d'un procédé selon l'une des revendications 1 à 9,
• l'envoi du document (110, 120, 130, 314) codé sous format numérique par le biais du réseau (340).

12. Procédé de demande avec la protection de l'intégrité de données (102) codées sous format numérique par le biais d'un réseau (340), le procédé comprenant :
• la demande d'un document (110, 120, 130, 314) codé sous format numérique par le biais du réseau (340), où le document (110, 120, 130, 314) codé sous format numérique comprend les données (102) codées sous format numérique, où, dans le cas des données (102) codées sous format numérique, il s'agit de données copiées d'un document source (100) codé sous format numérique et où le document (110, 120, 130, 314) codé sous format numérique a été établi sous la forme de copie codée sous format numérique moyennant l'emploi d'un procédé selon l'une des revendications 1 à 9,
• en réponse à la demande, la réception du document (110, 120, 130, 314) codé sous format numérique demandé par le biais du réseau (340).

13. Système informatique (300) permettant la protection de l'intégrité de copies (110, 120, 130, 314) codées sous format numérique d'un document source (100) codé sous format numérique moyennant l'emploi d'une structure de chaines de blocs (111, 121, 131, 200, 201, 229, 231, 312, 316) intégrée dans les copies (110, 120, 130, 314) pour l'enregistrement de l'historique d'origine des copies (110, 120, 130, 314), où le système informatique (300) comprend un processeur (302) et une mémoire (306) avec des instructions (304, 308) lisibles par machine, où une exécution des instructions (304, 308) lisibles par machine (304, 308) par le processeur (302) fait en sorte que le système informatique (300) exécute un procédé, lequel comprend :
• la mise au point d'un modèle de copie (100, 110, 120, 310), lequel comprend des données (102) du document source (100) codé sous format numérique et une structure de chaines de blocs (111, 121, 131, 200, 201, 229, 231, 312, 316) dans laquelle l'historique d'origine du modèle de copie (100, 110, 120, 310) est enregistré,
• l'établissement d'une copie (110, 120, 130, 314) codée sous format numérique de données (102) d'un modèle de copie (100, 110, 120, 310) codé sous format numérique, où les données (102) copiées comprennent les données (102) du document source (100) codé sous format numérique et la structure de chaînes de blocs (111, 121, 131, 200, 201, 229, 231, 312, 316) du modèle de copie (100, 110, 120, 310),
• l'ajout d'un bloc complémentaire (116, 128, 136) à la structure de chaînes de blocs (111, 121, 131, 200, 201, 229, 231, 312, 316) copiée, où le bloc complémentaire (116, 128, 136), lequel est associé au modèle de copie (100, 110, 120, 310), comprend un identificateur (104, 114, 124, 134) du modèle de copie (100, 110, 120, 310) et une caractéristique de vérification (PM) des données (102) copiés, laquelle permet une vérification de l'intégrité des données (102) copiées y compris de la structure de chaîne de blocs (111, 121, 131, 200, 201, 229, 231, 312, 316) copiée,
dans lequel, dans le cas de la structure de chaines de blocs (111), il s'agit d'une structure de chaînes de blocs concaténée de manière bidirectionnelle et l'ajout du bloc complémentaire (128, 136, 202) aux structures de chaines de blocs (111) dans le cadre d'un processus de copie comprend en outre, respectivement :
• la mise au point d'une fonction de concaténation (210) indépendante du processus de copie sous la forme d'une fonction de hachage,
• la dérivation d'une fonction de concaténation (212) bidirectionnelle individuelle pour le processus de copie en tant que caractéristique de vérification (PM) sous la forme d'une valeur de hachage à partir de la fonction de concaténation (210) indépendante du processus de copie,
où, pour la dérivation, un contenu de donnée de la première copie (120, 130, 314), laquelle est établie dans le cadre d'un processus de copie, est employé en tant que premier paramètre et un contenu de donnée du premier modèle de copie (110), lequel est employé pour le processus de copie, est employé en tant que deuxième paramètre, de sorte que la fonction de concaténation (212) bidirectionnelle individuelle pour le processus de copie est dépendante appariée à la fois de la première copie (120, 130, 314) établie mais également du premier modèle de copie (110) employé,
• la concaténation bidirectionnelle du premier bloc (116, 128, 136, 202) à ajouter avec un bloc ajouté en dernier lieu de la structure de chaines de blocs (111) correspondante, où la concaténation bidirectionnelle comprend un ajout de la fonction de concaténation (212) bidirectionnelle individuelle pour le processus de copie en tant que caractéristique de vérification (PM) à la fois au bloc (116, 128, 136, 202) à ajouter et également au bloc (116, 127, 204) ajouté en dernier lieu de la structure de chaines de blocs (101, 111, 121, 131, 200, 201, 229, 231, 312, 316) correspondante.

14. Système de mémoire de données électronique permettant l'enregistrement avec une protection de l'intégrité de données (102) codées sous format numérique, lequel comprend un système informatique (300) selon la revendication 13, où le système informatique (300) comprend un processeur (302) et une mémoire (306) avec des instructions (304, 308) lisibles par machine, où une exécution des instructions (304, 308) lisibles par machine (304, 308) par le processeur (302) fait en sorte que le système de mémoire de données exécute un procédé, lequel comprend :
• l'établissement d'un document (110, 120, 130, 314) codé sous format numérique, lequel comprend les données (102) codées sous format numérique à enregistrer, où, dans le cas des données (102) codées sous format numérique, il s'agit de données copiées d'un document source (100) codé sous format numérique et où le document (110, 120, 130, 314) codé sous format numérique est établi sous la forme de copie codée sous format numérique moyennant l'emploi d'un procédé selon l'une des revendications 1 à 9,
• l'enregistrement du document (110, 120, 130, 314) codé sous format numérique dans la mémoire (306) du système de mémoire de données (300) électronique.

15. Système de télécommunication permettant l'envoi avec une protection de l'intégrité de données (102) codées sous format numérique par le biais d'un réseau (340), lequel comprend un système informatique (300) selon la revendication 13, où le système informatique (300) comprend un processeur (302) et une mémoire (306) avec des instructions (304, 308) lisibles par machine, où le système de télécommunication (300) comprend en outre une interface de communication (318) permettant la communication par le biais du réseau (340), où une exécution des instructions (304, 308) lisibles par machine (304, 308) par le processeur (302) fait en sorte que le système de télécommunication (300) exécute un procédé, lequel comprend :
• l'établissement d'un document (110, 120, 130, 314) codé sous format numérique, lequel comprend les données (102) codées sous format numérique à envoyer, où, dans le cas des données (102) codées sous format numérique, il s'agit de données copiées d'un document source (100) codé sous format numérique et où le document (110, 120, 130, 314) codé sous format numérique est établi sous forme de copie codée sous format numérique moyennant l'emploi d'un procédé selon l'une des revendications 1 à 9,
• l'envoi du document (110, 120, 130, 314) codé sous format numérique par le biais du réseau (340).

16. Système, lequel comprend un premier système de télécommunication selon la revendication 15 permettant l'envoi avec la protection de l'intégrité de données (102) codées sous format numérique par le biais d'un réseau (340) et un deuxième système de télécommunication (320) permettant de faire appel avec une protection de l'intégrité à des données (102) codées sous format numérique par le biais du réseau (340), où le système de télécommunication (320) comprend un processeur (322) et une mémoire (326) avec des instructions (324) lisibles par machine, où le système de télécommunication (320) comprend en outre une interface de communication (328) permettant la communication par le biais du réseau (340), où une exécution des instructions (324) lisibles par machine par le processeur (322) fait en sorte que le système de télécommunication (320) exécute un procédé, lequel comprend :
• la demande d'un document (110, 120, 130, 314) codé sous format numérique du premier système de télécommunication par le biais du réseau (340), où le document (110, 120, 130, 314) codé sous format numérique comprend les données (102) codées sous format numérique, où, dans le cas des données (102) codées sous format numérique, il s'agit de données copiées d'un document source (100) codé sous format numérique et où le document (110, 120, 130, 314) codé sous format numérique a été établi sous la forme de copie codée sous format numérique moyennant l'emploi d'un procédé selon l'une des revendications 1 à 9,
• en réponse à la demande, la réception du document (110, 120, 130, 314) codé sous format numérique demandé par le premier système de télécommunication par le biais du réseau (340).
